# EUROPEAN PATENT SPECIFICATION

(11) **EP 4 690 078 B1**
(45) Date of publication and mention of the grant of the patent: **09.12.2026**
(21) Application number: 24719925.0
(22) Date of filing: 18.03.2024
(51) Int. Cl.: G06Q 30/0601

(54) **EXTENSIBLE COMPUTING SYSTEMS AND METHODS FOR PROCESSING CUSTOM PRODUCT ORDERS**
ERWEITERBARE COMPUTERSYSTEME UND VERFAHREN ZUR VERARBEITUNG VON ANGEPASSTEN PRODUKTBESTELLUNGEN
SYSTÈMES INFORMATIQUES EXTENSIBLES ET PROCÉDÉS DE TRAITEMENT DE COMMANDES DE PRODUITS PERSONNALISÉS

(30) Priority: 07.04.2023 US 202363457966 P
(43) Date of publication of application: 11.02.2026
(73) Proprietor: Wm. Wrigley Jr. Company, Chicago, IL 60642 (US)
(72) Inventor: CARR, Christopher, Chicago, IL 60642 (US); JOGUR, Chandan, G., Chicago, IL 60642 (US); BYRA, Rory, Lee, Chicago, IL 60642 (US)
(74) Representative: Haseltine Lake Kempner LLP
(86) International application number: PCT/US2024/020348
(87) International publication number: WO 2024/211071

(56) References cited:
- WO-A1-2018/023123
- US-A1- 2020 279 313
- US-B1- 11 228 656

## Description

### CROSS-REFERENCE TO RELATED APPLICATION(S)

This application claims the benefit of priority to U.S. Provisional Application. No. 63/457,966, filed on April 7, 2023.

### TECHNICAL FIELD

The present disclosure relates to systems and methods for processing custom product orders. More specifically, the present disclosure relates to systems and methods for processing orders for products customized in a physical store.

### BACKGROUND

A manufacturer of a customizable food item may produce a food item that is printed with content that identifies the food item. For example, a manufacturer of a candy may print a standard design including a particular image or text on the candy. In some cases, a user may select an alternative design to be printed on the food item from a set of pre-defined and pre-approved designs. For instance, the user may select a particular design to be printed on the food item to commemorate a holiday, a special occasion, or the like. As another example, a user may provide custom content to be printed on the food item, such as custom text and/or images. It may be desirable for a merchant associated with the manufacturer to offer customization of the food items both in physical stores (e.g., in-store) and online. However, in-store customization of products may introduce additional challenges.

US 2020/279313 A1 discloses a system for designing and producing customized food products.

### SUMMARY

Methods for in-store customization processes are described herein. An example method may be performed by a platform configured to integrate functionalities of an administrative system associated with a store providing in-store customization of products and a plurality of microservices, including at least a virtual queue system, a commerce platform, an event broker system, and a user messaging system, to process orders for products that are customized in the store using a kiosk application executing on a kiosk device. The example method may include: receiving, from the virtual queue system, a first request, wherein the first request includes device information for a user device of a user received by the virtual queue system as part of a registration process to place the user in a virtual queue for customizing a product in the store, and an estimated wait time for the user in the virtual queue determined by the virtual queue system; assigning a code to the user, wherein the assigned code is stored in a data store in association with the device information; and publishing a send queue confirmation message event that includes the device information, the assigned code, and the estimated wait time, wherein the event broker system transmits the send queue confirmation message event to at least the user messaging system to cause generation and transmission of a queue confirmation message to the user device, the queue confirmation message including the assigned code and the estimated wait time. The example method also includes: receiving, from the kiosk application, a code verification request including a code received as input to the kiosk application; in response to determining the code included in the code verification request matches the assigned code, providing, to the kiosk application, a response indicating the code is verified, wherein the kiosk application initiates a customization session based on the verification; providing, to the commerce platform, a request from the kiosk application to generate a cart for the customization session; and upon completion of the customization session, receiving, from the kiosk application, cart data including customization data and order-related data. The example method further includes: providing, to the commerce platform, at least a first portion of the cart data, wherein the commerce platform is configured to update the cart based on the first portion of the cart data and convert the cart to an order upon detecting a transaction for the order is approved; publishing a send order confirmation message event that includes the device information and an order identifier associated with the order, wherein the event broker system transmits the send order confirmation message event to at least the user messaging system to cause generation and transmission of an order confirmation message to the user device, the order confirmation message including the order identifier; and providing, to the administrative system, at least a second portion of the cart data, wherein the administrative system is configured to provide the second portion of the cart data for display via an application executing on an administrative device to initiate a fulfillment of the order, and in response to receiving an indication via the application that the order is fulfilled, publish an order completion event that is transmitted by the event broker system to at least the user messaging system to cause generation and transmission of an order completed message to the user device.

Systems for in-store customization processes are described herein. An example system comprises: an administrative system associated with a store providing in-store customization of products; a plurality of microservices, including at least a virtual queue system, a commerce platform, an event broker system, and a user messaging system; and a platform configured to integrate functionalities of the administrative system and the plurality of microservices to process orders for products that are customized in the store using a kiosk application executing on a kiosk device. The platform includes at least one memory configured to store instructions, and at least one processor configured to execute the instructions to perform operations. The operations include: receiving, from the virtual queue system, a first request, wherein the first request includes device information for a user device of a user received by the virtual queue system as part of a registration process to place the user in a virtual queue for customizing a product in the store, and an estimated wait time for the user in the virtual queue determined by the virtual queue system; assigning a code to the user, wherein the assigned code is stored in a data store in association with the device information; and publishing a send queue confirmation message event that includes the device information, the assigned code, and the estimated wait time, wherein the event broker system transmits the send queue confirmation message event to at least the user messaging system to cause generation and transmission of a queue confirmation message to the user device, the queue confirmation message including the assigned code and the estimated wait time. The operations also include: receiving, from the kiosk application, a code verification request including a code received as input to the kiosk application; in response to determining the code included in the code verification request matches the assigned code, providing, to the kiosk application, a response indicating the code is verified, wherein the kiosk application initiates a customization session based on the verification; providing, to the commerce platform, a request from the kiosk application to generate a cart for the customization session; and upon completion of the customization session, receiving, from the kiosk application, cart data including customization data and order-related data. The operations further include: providing, to the commerce platform, at least a first portion of the cart data, wherein the commerce platform is configured to update the cart based on the first portion of the cart data and convert the cart to an order upon detecting a transaction for the order is approved; publishing a send order confirmation message event that includes the device information and an order identifier associated with the order, wherein the event broker system transmits the send order confirmation message event to at least the user messaging system to cause generation and transmission of an order confirmation message to the user device, the order confirmation message including the order identifier; and providing, to the administrative system, at least a second portion of the cart data, wherein the administrative system is configured to provide the second portion of the cart data for display via an application executing on an administrative device to initiate a fulfillment of the order, and in response to receiving an indication via the application that the order is fulfilled, publish an order completion event that is transmitted by the event broker system to at least the user messaging system to cause generation and transmission of an order completed message to the user device.

Non-transitory computer-readable media for storing instructions associated with in-store customization processes are described herein. An example non-transitory computer-readable medium may be configured to store instructions that, when executed by one or more processors of a platform configured to integrate functionalities of an administrative system associated with a store providing in-store customization of products and a plurality of microservices, including at least a virtual queue system, a commerce platform, an event broker system, and a user messaging system, cause the one or more processors to perform operations to process orders for products that are customized in the store using a kiosk application executing on a kiosk device. The operations include: receiving, from the virtual queue system, a first request, wherein the first request includes device information for a user device of a user received by the virtual queue system as part of a registration process to place the user in a virtual queue for customizing a product in the store, and an estimated wait time for the user in the virtual queue determined by the virtual queue system; assigning a code to the user, wherein the assigned code is stored in a data store in association with the device information; and publishing a send queue confirmation message event that includes the device information, the assigned code, and the estimated wait time, wherein the event broker system transmits the send queue confirmation message event to at least the user messaging system to cause generation and transmission of a queue confirmation message to the user device, the queue confirmation message including the assigned code and the estimated wait time. The operations also include: receiving, from the kiosk application, a code verification request including a code received as input to the kiosk application; in response to determining the code included in the code verification request matches the assigned code, providing, to the kiosk application, a response indicating the code is verified, wherein the kiosk application initiates a customization session based on the verification; providing, to the commerce platform, a request from the kiosk application to generate a cart for the customization session; and upon completion of the customization session, receiving, from the kiosk application, cart data including customization data and order-related data. The operations further include: providing, to the commerce platform, at least a first portion of the cart data, wherein the commerce platform is configured to update the cart based on the first portion of the cart data and convert the cart to an order upon detecting a transaction for the order is approved; publishing a send order confirmation message event that includes the device information and an order identifier associated with the order, wherein the event broker system transmits the send order confirmation message event to at least the user messaging system to cause generation and transmission of an order confirmation message to the user device, the order confirmation message including the order identifier; and providing, to the administrative system, at least a second portion of the cart data, wherein the administrative system is configured to provide the second portion of the cart data for display via an application executing on an administrative device to initiate a fulfillment of the order, and in response to receiving an indication via the application that the order is fulfilled, publish an order completion event that is transmitted by the event broker system to at least the user messaging system to cause generation and transmission of an order completed message to the user device.

### BRIEF DESCRIPTION OF THE DRAWINGS

FIG. 1 is a diagram of an example environment for processing custom product orders.
FIGs. 2A-2C are flow diagrams of example in-store customization processes.
**FIG.** 3 is a flow chart of an example method for processing custom product orders.
FIG. 4 is a diagram of an example image upload process flow associated with an in-store customization process.
FIG. 5 is a diagram of an example payment process flow associated with an in-store customization process.
FIGs. 6A- 6C are example virtual queue user interfaces.
FIGs. 7A-7C are example message threads associated with the example in-store customization processes of FIGs. 2A-2C.
FIGs. 8A- 8F are example customization session user interfaces.
FIG. 9 is a diagram of example components of one or more devices of FIGS. 1 and 2.

### DETAILED DESCRIPTION

**As** addressed above, a manufacturer of a food item may offer customization of the food item both online and in a physical store of an associated merchant. However, in-store customization may introduce additional challenges. For example, the processing of orders for products customized in the store may involve a plurality of services implemented across multiple devices and/or systems. Some of the devices and/or systems may be physically located in the store and other devices and/or systems may be remotely located. Conventionally, a frontend application running on one or more in-store devices that users may interact with to perform the customization process (e.g., a kiosk application running on a kiosk device) may have end-to-end application programming interface (API) connectivity with each of the different services to enable communication of information associated with the custom product order processing. Resultantly, the kiosk application may often transmit the same information as two or more API requests to two or more of the services, causing additional computing resources to be unnecessarily consumed. Additionally, given this type of connectivity, if one of the services malfunctions or otherwise cannot perform as usual, an entirety of the custom product order processing may malfunction or be negatively affected. For similar reasons, adding additional services, removing services, and/or replacing services may be more difficult and time-consuming as the end-to-end API connectivity between the kiosk application and the services needs to be separately established.

Additionally, the store may include a limited number of kiosk devices that the users may interact with to perform the customization process. The customization process may often be time-consuming as users explore different customization options and/or preview customization selections, and a number of users that visit the store at a given time of day and/or day of week to customize the food items may vastly fluctuate. During time periods when the volume of users is high (e.g., the number of users surpasses the number of devices), establishing a virtual queue for using the kiosk devices and providing associated user messaging may be advantageous for efficient user flow through the customization process.

To address at least the foregoing, the present disclosure provides systems and computer-implemented methods for processing custom product orders, and more specifically processing orders for products customized in a store. For example, an in-store custom order platform may be configured to integrate functionalities of an administrative system associated with the store and a plurality of microservices within a cloud computing environment to process in-store custom product orders. The in-store custom order platform may be the primary communicative connection for the kiosk application running on the in-store kiosk device, and act as a gateway for sending and receiving information between the kiosk application and the microservices. Each of the microservices may be hosted or deployed as individual nodes within the cloud computing environment to provide separation and/or isolation. Therefore, if one of the microservices malfunctions and/or otherwise does not perform as usual, remaining processing aspects performed by other microservices and/or systems are unaffected.

Additionally, while some end-to-end API connectivity may be implemented within the cloud computing environment, a publish-subscribe pattern may also be implemented via an event broker system (e.g., one of the microservices). The publish-subscribe pattern enables a given service (e.g., a publisher) to publish information as a single event that is then routed via the event broker system to any other service that is subscribing to one or more types of information associated with the event (e.g., a subscriber). For example, a single event may be routed to two or more subscribing services, as opposed to generating and transmitting two or more API requests to the two or more services. Also, only the relevant potions of the information may be provided to the respective two or more services based on the subscription. In a publish-subscribe pattern, the publishers and subscribers have no knowledge of each other, and thus any service may be more easily added, removed, and/or replaced within the cloud computing environment.

Further, at least one of the microservices may be configured to provide and monitor a virtual queue to help ensure efficient user flow through the customization process when the volume of users in the store is high. Messages may be sent to the user to indicate placement of the user in the virtual queue and/or when it is the user's turn to use one of the kiosk devices.

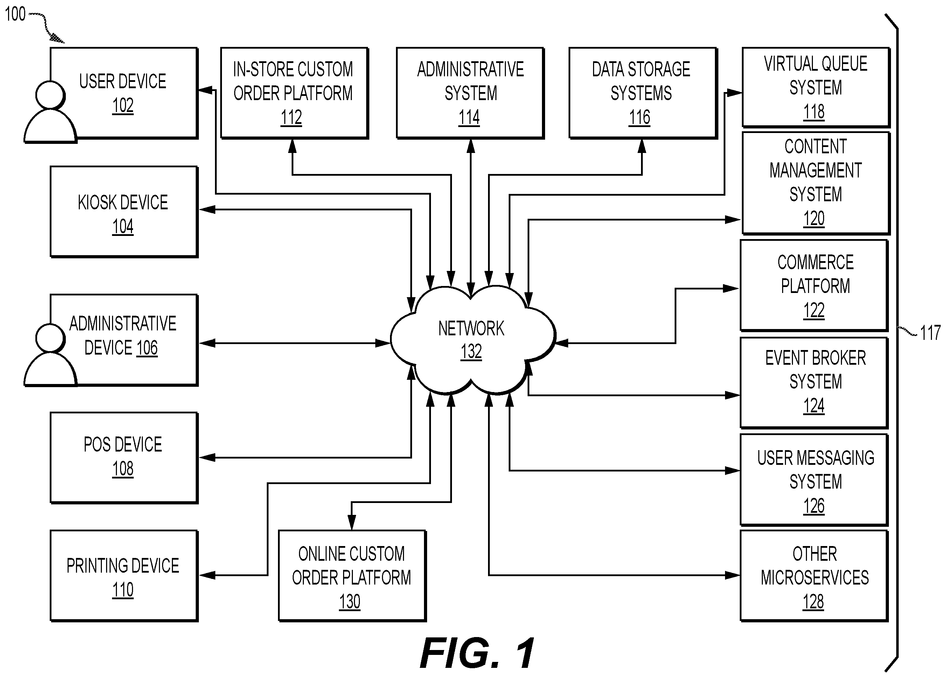

FIG. 1 is a diagram of an example environment 100 for processing custom product orders. An example entity offering customizable products may include a manufacturer of customizable food items, such as customizable confectionary products or candies. In some examples, the entity may provide users both in-store and online options for ordering the customizable products. In such examples, the environment 100 may include a plurality of devices located in a physical store of a merchant associated with the entity, including a user device 102, a kiosk device 104, an administrative device 106, a point of sale (POS) device 108, and a printing device 110. The environment 100 may also include a plurality of systems located in one or more cloud computing environments to facilitate in-store customization of products, including an in-store custom order platform 112, an administrative system 114, one or more data storage systems 116, and a plurality of microservices 117. Examples of the microservices 117 may include a virtual queue system 118, a content management system 120, a commerce platform 122, an event broker system 124, and a user messaging system 126, among other microservices 128. The environment 100 may also include an online custom order platform 130 to facilitate online customization of products online. The environment 100 may further include a network 132 to enable communication between the above-described components of the environment 100.

The user device 102 may be a device of a user interested in ordering a custom product in the store. In some embodiments, the user device 102 may be configured to scan an in-store item (e.g., a QR code, bar code, or the like) to join a virtual queue for the store, if active. The virtual queue may be a virtual line or waitlist for users wanting to order a custom product in the store using the kiosk device 104. When joining the virtual queue, device information of the user device 102 may be received as part of a registration process such that the user device 102 may be configured to receive a plurality of messages indicating a status and/or a current stage throughout the process In other embodiments, the user device 102 may be configured to scan the in-store item to cause an in-store customization application to launch on the user device 102. Similar to the kiosk application of the kiosk device 104 described in detail below, the in-store customization application may communicate with the in-store custom order platform 112 over the network 132 to enable the user to customize one or more products (e.g., via a customization session) while the user is located in the store. For example, the in-store customization application may be a progressive web application that is geo-fenced such that the in-store customization application is only capable of executing within a predefined geographical boundary associated with the store (e.g., the perimeter of the store and/or a predetermined distance extending from and surrounding the store). In further embodiments, if the user prefers to customize and order the product entirely online or switches from an in-store to an online customization process (e.g., due to a long wait time in the virtual queue and/or a need to physically leave the store), the user device 102 may communicate with the online custom order platform 130 through an online customization application executing on a web browser on the user device 102, for example, to customize and order the product. The user device 102 may be a smartphone, a desktop computer, a laptop computer, a tablet computer, a wearable device, or the like, of the user.

The kiosk device 104 physically located in the store may enable the user to customize one or more products when it is the user's turn based on the virtual queue. For example, a kiosk application executing on the kiosk device 104 may provide a plurality of user interfaces for display on the kiosk device 104. When the customizable product is a customizable food item, the user may interact with the plurality of user interfaces to select one or more colors of the food item, input custom content to be printed on the food item, and/or select a packaging for the food item to generate a custom product order. The kiosk application may communicate with the in-store custom order platform 112 over the network 132. In some examples, the kiosk application may communicate by sending requests through a state management library client. The kiosk device 104 may be a kiosk, a desktop computer, a tablet computer, or the like, located within the store. In some examples, the kiosk device 104 may include a printer to enable printing of documents, such as a paper ticket or receipt. In further examples, a terminal or other similar device configured to process transactions may be attached to the kiosk device 104. While one kiosk device 104 is shown in FIG. 1, the store may include a plurality of kiosk devices to enable multiple uses to engage in customization sessions in parallel.

The administrative device 106 may be device associated with an associate (e.g., an employee) of the store configured to communicate with the administrative system 114 over the network 132 via one or applications executing on the administrative device 106. One example application is a front-out-house (FOH) application. Generally, the FOH application may be utilized by a FOH associate that is engaging with the user during the in-store customization process. For example, the FOH application may be configured to enable review and editing of the custom product order prior fulfillment. Additionally, the FOH application may be configured to view information associated with and/or change a status of the virtual queue for the store (e.g., activate or deactivate the virtual queue based on the volume of users in the store). Further, the FOH application may be configured to receive reserved codes for the store to assist any users that do not have associated user devices, such as the user device 102, or do not want to use their associated user devices to join the virtual queue. Another example application is a back-of-house (BOH) application. Generally, the BOH application may be utilized by a BOH associate that is fulfilling the custom product order. For example, the BOH application may be configured to display custom product orders ready to be packaged, and provide a mechanism for updating a status of the custom product order once the custom order is packaged. The administrative device 106 may be a smartphone, a desktop computer, a laptop computer, a tablet computer, a wearable device, or the like. While one administrative device 106 is shown in FIG. 1, the store may include a plurality of administrative devices 106. In some examples, a first subset of the administrative devices 106 may be dedicated FOH administrative devices on which the FOH application may be executed, and a second subset of the administrative devices 106 may be dedicated BOH administrative devices on which the BOH application may be executed. In other examples, the administrative devices 106 may execute both the FOH and BOH applications, and thus may be used interchangeably and/or moved around the store (e.g., from BOH to FOH and vice versa).

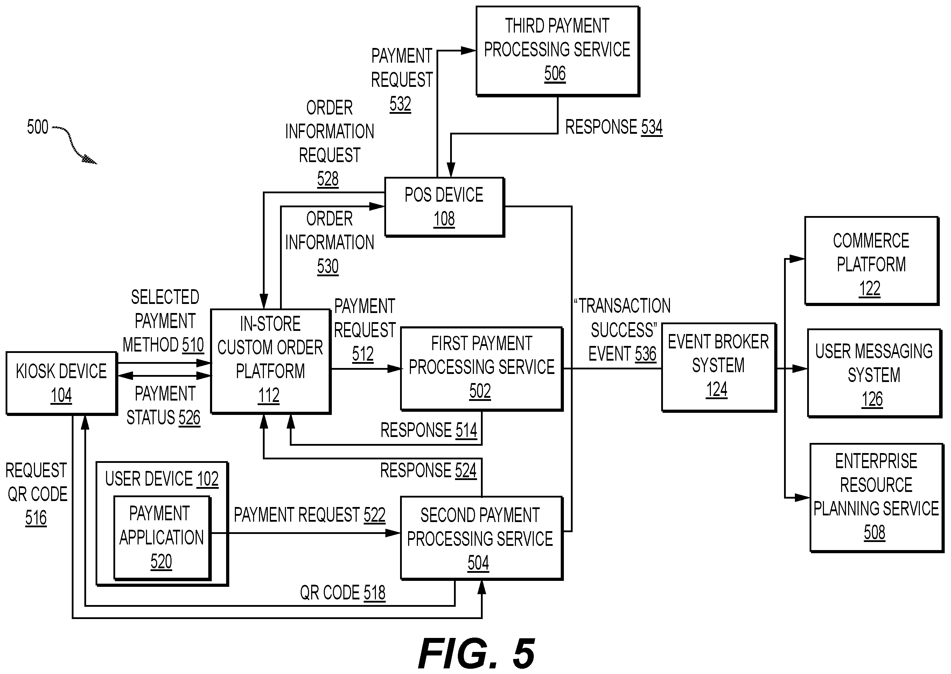

**The** POS device 108 may be configured to process in-store transactions between users and the merchant, including transactions for custom product orders. In some examples, the POS device 108 may be a standalone device, such as a smartphone, a desktop computer, a laptop computer, a tablet computer, or the like. In other examples, the POS device 108 may be integrated with the administrative device 106. In further examples, various options for completing in-store transactions can be provided to the users. For example, as described in detail with reference to FIG. 5, upon completion of a customization session at the kiosk device 104, a user may be provided options of tap to pay utilizing the kiosk device 104, scan to pay utilizing the kiosk device 104 and the user device 102, and/or pay at the register (e.g., the POS device 108).

The printing device 110 may be configured to print custom content on a product, such as the food item. For example, the printing device 110 may be a printer, a food processing device, manufacturing equipment, or the like.

The user device 102, kiosk device 104, administrative device 106, POS device 108, and/or printing device 110 may include one or more input and/or output devices that may include one or more interfaces for receiving signals or output from and providing signals or output to other devices and/or systems of the environment 100 that allow data to be received and/or transmitted by the respective devices. For example, the user device 102, kiosk device 104, administrative device 106, POS device 108, and/or printing device 110 may include interface components, which may provide interfaces to one or more input devices, such as one or more keyboards, mouse devices, touch screens, track pads, trackballs, scroll wheels, digital cameras, microphones, sensors, and the like.

The in-store custom order platform 112 may be configured to connect or integrate functionalities of the administrative system 114 and the microservices 117 to process in-store custom product orders. The in-store custom order platform 112 may be a cloud server. In some examples, the cloud server may be a GraphQL server. The in-store custom order platform 112 may be communicatively coupled to the kiosk application executing on the kiosk device 104, and serve as a gateway for transmitting information between the kiosk application and one or more of the administrative system 114 and/or microservices 117. In other words, the in-store custom order platform 112 may be a single source of connectivity for the kiosk application, as opposed to the kiosk application being communicatively coupled to each of the administrative system 114 and/or microservices 117.

For example, the in-store custom order platform 112 may provide the kiosk application data for display during a customization session. For data fetching, the in-store custom order platform 112 may use Graph QL query language. Such query language may enable the in-store custom order platform 112 to request data from multiple data sources (e.g., from multiple of the microservices 117) using a single query to provide to the kiosk application. Additionally, the in-store custom order platform 112 may provide customization data and order-related data, among other types of data, received from the kiosk application to one or more of the administrative system 114 and/or microservices 117 to perform different aspects of the in-store custom product order process, as described in detail throughout the disclosure.

The in-store custom order platform 112 may have end-to-end connectivity with the kiosk application, the administrative system 114, and at least a portion of the microservices 117 (e.g., via API endpoints) to enable transmission of various requests and corresponding responses. Additionally, and as described in more detail below, the cloud computing environment may implement a publish-subscribe pattern supported by the event broker system 124 to reduce the number of specific API endpoints needed to communicate information among the various systems and devices of the cloud computing environment to promote an extensibility thereof.

The administrative system 114 may be configured to provide administrative-related interfaces and functionalities associated with control of the virtual queue, order review and editing, and/or order fulfillment through the FOH and/or BOH applications executing on the administrative device 106.

The data storage systems 116 may be systems configured to store information associated with the in-store and/or online customization processes. The data storage systems 116 may each include one more data stores. At least one of the data stores may be a cache for temporary storage. In some examples, one or more of the data storage systems 116 may be dedicated to storing information associated with the in-store customization processes, while one or more other of the data storage systems 116 may be dedicated to storing information associated with the online customization processes.

Each of the microservices 117, addressed in turn below, may be configured to perform one or more operations associated with the processing of the custom order product. In some examples, one or more functionalities and/or processes of the microservices 117 may be hosted or deployed as individual nodes within the cloud computing environment. For example, one or more nodes may be deployed for a given microservice 117. Hosting each of the microservices 117 as individual nodes may provide separation and/or isolation from the other microservices 117 and/or systems in the cloud computing environment. Therefore, if one of the microservices 117 malfunctions, the remaining processing aspects performed by the other microservices 117 and/or systems may be unaffected.

**The** virtual queue system 118 may be configured to provide a registration process for placing the user in the virtual queue for the store when the virtual queue is active. The virtual queue system 118 may also be configured to monitor the virtual queue for the store to determine and update wait times for users in the virtual queue based on indications received from the in-store custom order platform 112, as described in detail elsewhere herein.

**The** content management system 120 may be configured to provide a first set of content, including customization content and user interface components, for display via the kiosk application of the kiosk device 104 during a customization session. Continuing with the customizable food item example, the customization content may include available colors for the customizable food item and available symbols for printing onto the customizable food item, among other similar examples. The first set of content may be specific to the store such that only colors and/or symbols available for that store are displayed as options during customization session. The content management system 120 may also be configured to provide second set of content, including customization content and user interface components, for display via the online customization application executing on the user device 102 during an online customization process. The customization content included in the second set of content may include the available colors for the customizable food item and available symbols for printing onto the customizable food item online, which may be the same or different than what is available in the store.

**The** first and second sets of content may include one or more shared user interface components such that the user experience whether in-store or online is standardized (e.g., has a similar look and/or feel). The shared user interface components may be stored in a shared library accessible by both the in-store custom order platform 112 and the online custom order platform 130. The storage of the shared user interface components in the shared library may prevent the duplication of code and subsequent updating of code in two separate locations for shared changes. In some examples, the share library is stored in one of the data storage systems 116.

The commerce platform 122 may be configured to provide a plurality of commerce-related tools and functionalities, including per-store product availability, inventory, and pricing, virtual queue status tracking for the store, order generation, order state management, and the like.

The event broker system 124 may be configured to transmit events between event producers and consumers in the publish-subscribe pattern implemented by the cloud computing environment. For example, any one of the systems in the cloud computing environment may produce and publish an event. The event broker system 124 may intercept the published event and transmit at least a portion of information associated with the event to any of the other systems in the cloud computing environment that have subscribed to receive such information. Resultantly, the publishing system may be able to publish information via one event that can reach multiple subscribing systems without any knowledge of those multiple subscribing systems, as opposed to having end-to-end connectivity with each of the other systems to send multiple API requests to provide the information. Additionally, the portion of the information transmitted to each of the subscribing systems may be tailored to the specific information consumed by the subscribing system.

The user messaging system 126 may be configured to generate and send one or more messages to the user device 102 throughout the in-store customization process. The messages may indicate a status and/or a current stage in the process. The messages may be text messages, including short messages service (SMS) messages, multimedia messaging services (MMS) messages, or a combination thereof. In other examples, the messages may include other types of electronic messages, such as electronic mail (e-mail), instant messages, an automated voice call, or the like. For example, the messages may be instant messages associated with a messaging application, where a type of the messaging application utilized in conjunction with the user messaging system 126 may be based on a country and/or region in which the store is located (e.g., based on popularity and/or availability of the messaging application). In some examples, the user messaging system 126 may be integrated with the event broker system 124 such that the messages are automatically generated and sent by the user messaging system 126 in response to receipt of specific events by the event broker system 124.

The other microservices 128 may be configured to perform one or more additional processes integratable by the in-store custom order platform 112 to process custom product orders. Examples of the other microservices 128 may include payment processing services, enterprise resource planning (ERP) services, QR code generation services, image upload services, content moderation services, image transformation services, marketing services, and/or analytics services, among other services, described in detail elsewhere herein.

The cloud computing environment may be extensible, whereby further microservices may be seamlessly added (e.g., as additional nodes) to integrate one or more additional microservice processes. Additionally, one or more of the microservices can be seamlessly removed if no longer needed, and/or replaced if a different vendor of the microservice is to be used, for example. Further, the integration of the functionalities of the administrative system 114 and the microservices 117 by the in-store custom order platform 112, may provide composability.

The online custom order platform 130 may be configured to process an online customization process based on information received via the online customization application executing on the user device 102. In some examples, an entirety of the customization process may be performed online. In other examples, one or more initial aspects of the customization process may be performed in-store, while remaining aspects of the customization process may be performed online. In examples where the user wishes to switch from in-store to online, an identifier of the session (e.g., an order number) may be provided to the user at the store. This identifier may be stored in association with any customization and/or order information provided in-store through the kiosk application within one of the data storage systems 116. Therefore, when the identifier is provided by the user as input to the online customization application to continue the customization process online, the identifier may be used to retrieve the customization and/or order information provided in-store to seamlessly continue with the customization process (e.g., to prevent the user from having to repeat one or more steps of the process).

The network 132 may be a network configured to permit communication among the components of the environment 100. For example, the network 132 may be a cellular network (e.g., a fifth generation (5G) network, a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, or the like, and/or a combination of these or other types of networks.

The number and arrangement of the devices and systems of the environment 100 shown in FIG. 1 are provided as an example. In practice, the environment 100 may include additional devices and/or systems, fewer devices and/or systems, different devices and/or systems, or differently arranged devices and/or systems than those shown in FIG. 1. Additionally, or alternatively, a set of devices and/or systems (e.g., a combination of one or more devices and/or systems) of the environment 100 may perform one or more functions described as being performed by another set of devices and/or systems of the environment 100.

While specific examples included throughout the present disclosure include color, design, and packaging-related customization of food items, it should be understood that techniques according to this disclosure may be adapted to other types of products onto which content may be printed for customization, including t-shirts, mugs, etc. It should also be understood that the examples above are illustrative only. The techniques and technologies of this disclosure may be adapted to any suitable activity.

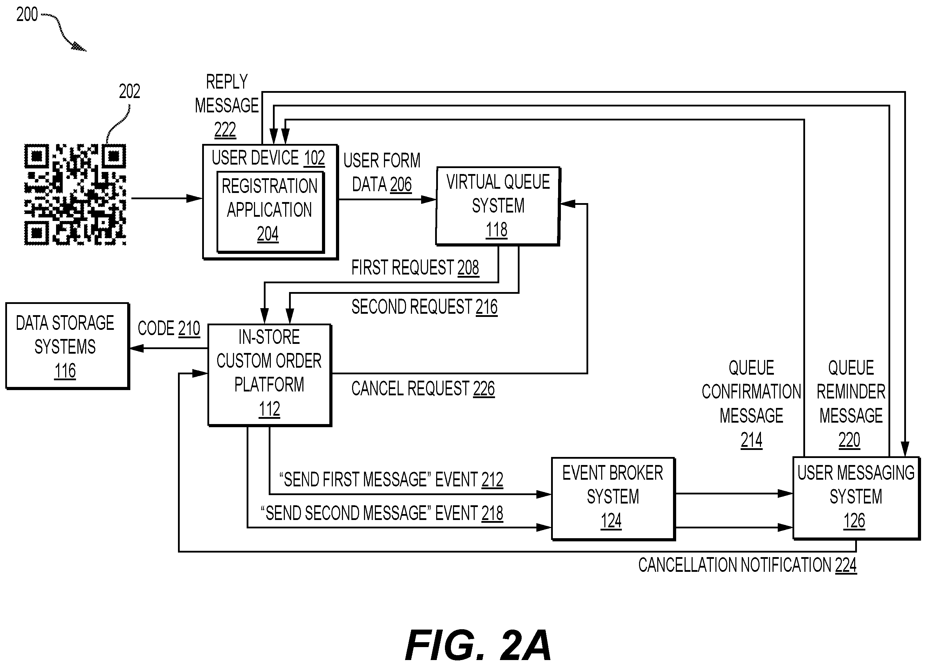

FIGs. 2A-2C are diagrams 200, 230, 240 of example processes for in-store customization performed by one or more components of the environment 100 described in FIG. 1. In these examples processes, the user, and thus the user device 102, may be located in a first store of a plurality of stores of the merchant associated with the manufacturer that is selling customizable food items. As shown in the diagram 200 of FIG. 2A, the first store may include paper and/or digital signage posted at various locations around the first store that prompts the user device 102 to scan an item 202, such as a QR code, a barcode, or other similar machine-readable indicia, included on the signage to join a virtual queue of the first store. The item 202 may include a store identifier for the first store and a uniform resource locator (URL) to a registration application 204 associated with the virtual queue system 118.

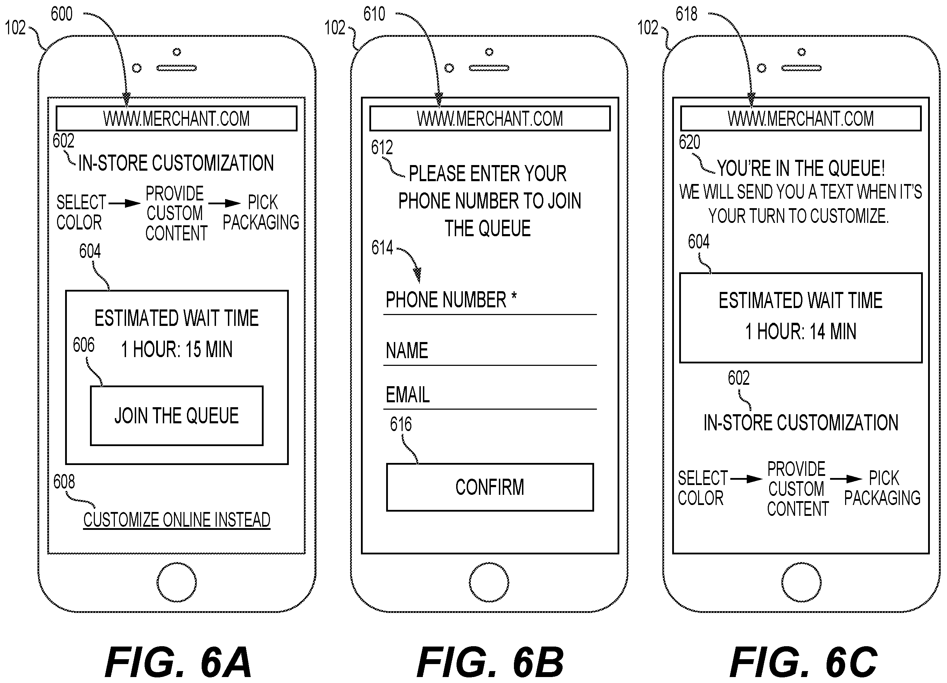

Scanning of the item 202 by the user device 102 may cause the registration application 204 to be launched in a web browser on the user device 102. A landing page of the registration application 204 may include an overview of the in-store customization process, an estimated wait time obtained from the virtual queue system 118, a first option to join the queue, and a second option to continue with an online customization process. An example user interface of the landing page is shown in FIG. 6A. The virtual queue system 118 may be configured to compute estimated wait times on a per store basis. For example, the computations for the first store may be based on a number of the kiosk devices 104 located in the first store, the number of users in the virtual queue, and an average user experience duration at the kiosk devices 104 located in the first store. Additionally, when a customization session ends at one of the kiosk devices 104, the in-store custom order platform 112 may provide an indication to the virtual queue system 118, and the virtual queue system 118 may update estimated wait times for the first store accordingly (e.g., based on the actual user experience duration).

In response to receiving a selection of a first option to join the queue as input to the landing page, a registration page of the registration application 204 may be displayed on the user device 102. The registration page may include a form requesting user information, such as device information (e.g., a mobile phone number), name, and email address. Input of at least the device information of the user device 102 or an alternative device of the user may be provided to proceed with the registration process. An example user interface of the registration page is shown in FIG. 6B. The user information provided as input via the form (e.g., user form data 206) may be received by the virtual queue system 118 via the registration application 204. The virtual queue system 118 may associate the user form data 206 with a queue registration identifier. A confirmation page of the queue registration application may then be displayed on the user device 102. The confirmation page may indicate the user has been placed in the queue. In some examples, the estimated wait time and/or the overview of the in-store customization process may be re-displayed on the confirmation page. The estimated wait time may be updated by the virtual queue system 118 to account for time passed in completing the registration process, any indications received from the in-store custom order platform 112 of in-store customization sessions ending, and/or any other users that had been newly registered and placed into the virtual queue. An example confirmation page is shown in FIG. 6C.

The virtual queue system 118 may provide the user form data 206 and the estimated wait time to the in-store custom order platform 112 as part of a first request 208. In some examples, the first request 208 may also include the queue registration identifier. Upon receiving the first request 208, the in-store custom order platform 112 may be configured to select a code 210 to assign to the user form data 206. The assigned code 210 may be selected from a subset of codes designated to the first store. For example, each store of the plurality of stores of the merchant may be designated different subsets of codes. The assigned code 210 may be stored in a list of assigned codes corresponding to the virtual queue in one of the data storage systems 116. The list may be updated to remove assigned codes as respective users start a customization process at the kiosk device 104 or are otherwise removed from the virtual queue. In some examples, the assigned code 210 may further be stored in association with an order identifier generated by the commerce platform 122. In examples where the queue registration identifier is received from the virtual queue system 118, the queue registration identifier may also be stored in association with the assigned code 210. Additionally, the in-store custom order platform 112 may provide the assigned code 210 to the virtual queue system 118, and the virtual queue system 118 may be configured to associate the assigned code 210 with the queue registration identifier and/or user form data 206. The code helps to ensure that the virtual queue process works as designed to prevent any users without a code or users positioned further back in the virtual queue from being able to perform a customization process at the kiosk device 104 before their turn when the virtual queue is active (e.g., to prevent users from being skipped), as described in detail below.

Additionally, the in-store custom order platform 112 may publish a "send first message" event 212 to the event broker system 124. The "send first message" event 212 may include the device information for the user device 102, the assigned code 210, the estimated wait time for the user in the virtual queue, and a first template identifier. The event broker system 124 may transmit the "send first message" event 212 to one or more subscribing systems, including at least the user messaging system 126. In response, the user messaging system 126 may generate and send a queue confirmation message 214 to the user device 102 based on the information included in the "send first message" event 212. For example, the queue confirmation message 214 may be a first SMS message generated using a first template associated with the first template identifier that indicates the user has been placed in the queue, and includes the assigned code 210 and the estimated wait time. The user device 102 may receive the queue confirmation message 214 in near real-time to the display of the confirmation page of the registration application 204 on the user device 102.

**In** some examples, the in-store custom order platform 112 may also be configured to provide the user form data 206 to one or more of the other microservices 128, such as a customer data platform configured to provide marketing or other similar services. The customer data platform may query one or more internal data stores (e.g., stored in data storage systems 116) using the user form data 206 to determine whether the user is a known user or an unknown user to the merchant. In some examples, an indicator of the status of the user as known or unknown to the merchant may be stored in association with the assigned code 210 and the order identifier.

As the virtual queue system 118 receives an indication from the in-store custom order platform 112 each time a customization session ends or completes at one of the kiosk devices 104 of the first store (e.g., the customization sessions being associated with users that were ahead of the user in the virtual queue), the virtual queue system 118 may update estimated wait times for any remaining users in the virtual queue for the first store, including the user. In some examples, the virtual queue system 118 may send an updated estimated wait time for the user to the in-store custom order platform 112 when the remaining wait time for the user reaches a predetermined value (e.g., when the remaining wait time is 15 minutes) to trigger a sending of a second message to the user device 102. In some examples, the virtual queue system 118 may send the assigned code 210 (if provided to the virtual queue system 118) and/or the queue registration identifier along with the updated estimated wait time as part of a second request 216 to the in-store custom order platform 112.

Upon receiving the second request 216, the in-store custom order platform 112 may publish a "send second message" event 218 to the event broker system 124. The "send second message" event 218 may include at least the device information for the user device 102 and a second template identifier. The event broker system 124 may transmit the "send second message" event 218 to one or more subscribing systems, including at least the user messaging system 126. In response, the user messaging system 126 may generate and send a queue reminder message 220 to the user device 102 based on information included in the "send second message" event 218. For example, the queue reminder message 220 may be a second SMS message generated using a second template associated with the second template identifier that indicates the wait time is almost over, and provides instructions to proceed to the kiosk device 104 to start a customization session.

In some examples, the queue reminder message 220 may also include a prompt to reply to the queue reminder message 220 with an indication of whether the user will proceed to the kiosk device 104 (e.g., by replying "YES") or would rather cancel or leave the virtual queue (e.g., by replying "NO"). If the user messaging system 126 receives a reply message 222 from the user device 102 indicating to cancel or leave the virtual queue, as shown in FIG. 2A, the user messaging system 126 may provide the in-store custom order platform 112 a cancellation notification 224. In response to the cancellation notification 224, the in-store custom order platform 112 may remove the assigned code 210 and any other associated information (e.g., the order identifier from the commerce platform 122, the queue registration identifier from the virtual queue system 118, etc.) from the list stored in data storage systems 116. Additionally, the in-store custom order platform 112 may notify the virtual queue system 118 of the cancellation via a cancel request 226 to prompt the virtual queue system 118 to remove the user from the virtual queue and update the estimated wait times accordingly.

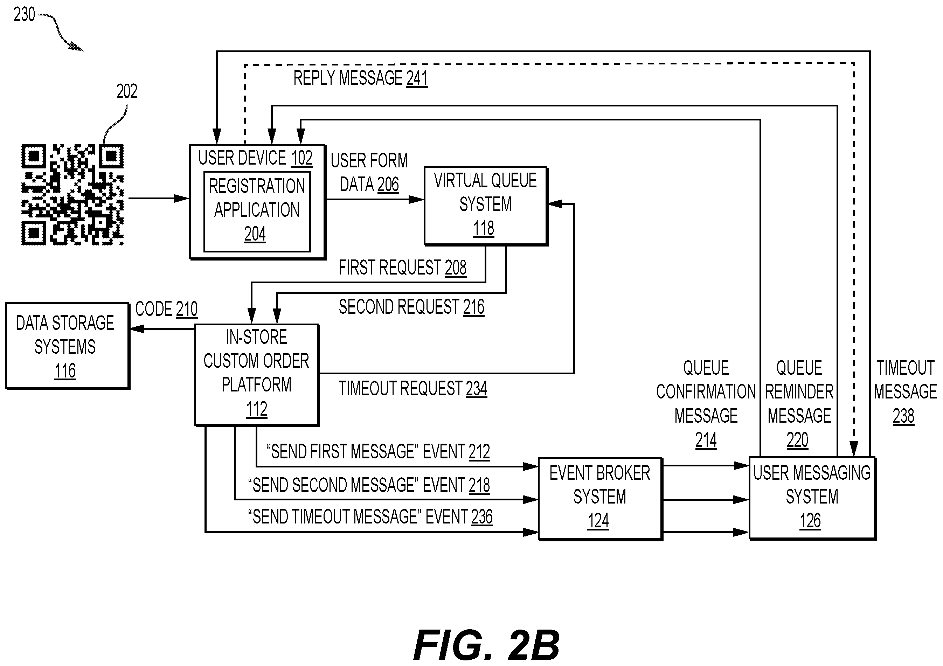

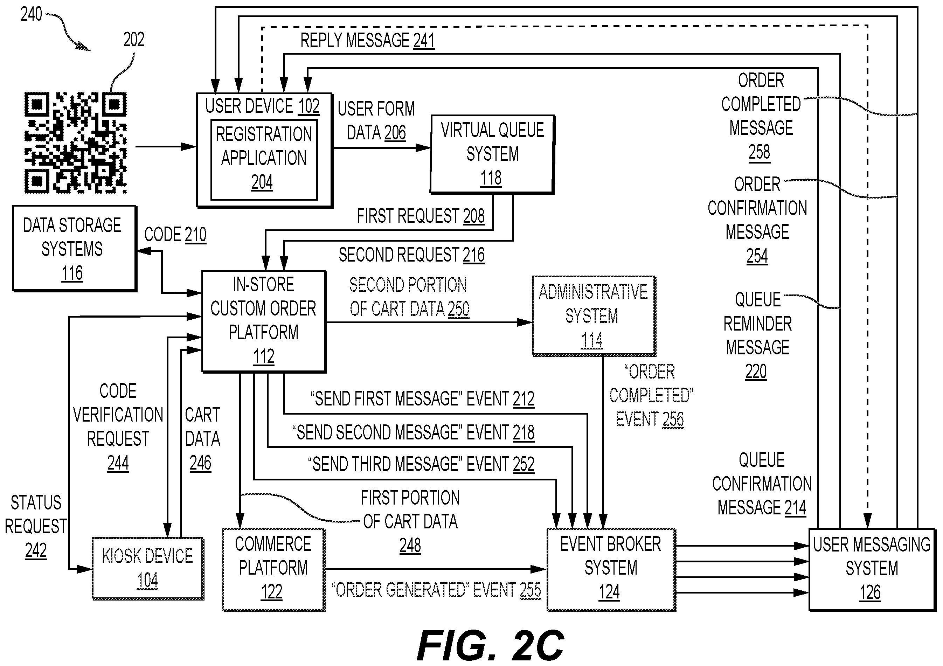

Otherwise, as shown in the diagram 230 of FIG. 2B and the diagram 240 of FIG. 2C, if a reply message 241 is optionally received by the user messaging system 126 from the user device 102 that indicates the user is proceeding to the kiosk device 104 or if no reply is received to the queue reminder message 220, a timeout period may be monitored by the in-store custom order platform 112.

If no code verification request associated with the assigned code 210 is received from the kiosk device 104 within a predefined time period from the publishing of the "send second message" event 218, a timeout may be detected by the in-store custom order platform 112. As shown in diagram 230 of FIG. 2B, when the timeout is detected, the in-store custom order platform 112 may remove the assigned code 210 and any other associated information from the list stored in the data storage systems 116, and transmit a timeout request 234 to the virtual queue system 118 to prompt the virtual queue system 118 to remove the user from the virtual queue and update the estimated wait times accordingly. In some examples, the in-store custom order platform 112 may also publish a "send timeout message" event 236 to the event broker system 124. The "send timeout message" event 236 may include at least the device information for the user device 102 and a timeout template identifier. The event broker system 124 may transmit the "send timeout message" event 236 to one or more subscribing systems, including at least the user messaging system 126. In response, the user messaging system 126 may generate and send a timeout message 238 to the user device 102 based on information included in the timeout "send timeout message" event 236. For example, the timeout message 238 may be an SMS message generated using a timeout template associated with the timeout template identifier indicating that the user has missed their turn to customize the product and a prompt to speak with an in-store associate if the user would like to re-join the virtual queue. The associate may utilize the FOH application executing on the administrative device 106 to override and re-join the user to the virtual queue.

In other examples, as shown in the diagram 240 of FIG. 2C, a code verification request 244 associated with the assigned code 210 may be received from the kiosk device 104 prior to the expiration of the predefined timeout period. For example, after the queue reminder message 220 is received by user device 102 and optionally responded to via the reply message 241, the user may approach the kiosk device 104 in the store. The kiosk device 104 may be executing a kiosk application, and the kiosk application may initially display a start page via which the user may select a language (e.g., English, Spanish, French, etc.) and select a control element to start a customization session.

In some examples, store-specific customization content from the content management system 120 (e.g., available colors, available symbols, etc.) and/or store-specific product data from the commerce platform 122 (e.g., available products, product pricing, etc.) used to configured the pages displayed by the kiosk application may have already been fetched by the in-store custom order platform 112 and stored in a cache in a separate cloud computing location closer to the kiosk device 104 to reduce latency of the kiosk application. For data fetching, the in-store custom order platform 112 may use Graph QL query language to request the store-specific customization content and product data from the content management system 120 and the commerce platform 122, respectively, using a single query. As any changes or updates are made to the store-specific customization content and/or product data, the in-store custom order platform 112 may collect associated data and update the cache accordingly.

**When** the control element is selected to start the customization session, the kiosk application may request a status of the virtual queue (e.g., status request 242) from the in-store custom order platform 112. The in-store custom order platform 112 may query the commerce platform 122 to obtain the status of the virtual queue for the first store. In the examples shown in FIGs. 2A-2C, the virtual queue for the first store is active, and thus the in-store custom order platform 112 may return the active status to the kiosk device 104 in response to the status request 242. Based on the virtual queue being active, the kiosk application may display a code request page requesting input of the assigned code 210.

Upon receiving a code as input, the kiosk device application may send the code as part of the code verification request 244 to the in-store custom order platform 112. The in-store custom order platform 112 may verify the code provided as input matches one of the assigned codes (e.g., the assigned code 210) stored in the data storage systems 116. The in-store custom order platform 112 may also verify that the assigned code 210 is next in the list of assigned codes corresponding to the virtual queue to start a customization process. In some examples, for verification purposes, next in the list may encompass a next N codes in the list (e.g., one of the next 3 or 4 codes in the list). The in-store custom order platform 112 may provide the verification to the kiosk application, along with the order identifier and the user form data 206 associated with the assigned code 210. Resultantly, the kiosk application may start a customization session, and proceed with displaying a plurality of customization-related pages to allow product customization, such as customization of food items.

**As** one example, the kiosk application may prompt the user to select one or more colors for the food items, provide custom content to be printed on the food items, and/or select one or more types of packaging to contain or store the food items via the customization-related pages displayed on the kiosk device 104. For the custom content, the user may be enabled to upload an image from the user device 102, provide text, and/or select pre-defined symbols to be printed on the food items. In some examples, any uploaded images and/or texts may be provided to one or more of the other microservices 128, such as the content moderation services and/or the image transformation services. Additionally, selection of the colors for the food items may be delayed until after the completion of the order, as the different colored food items may be available for viewing and selection in person at the check-out location.

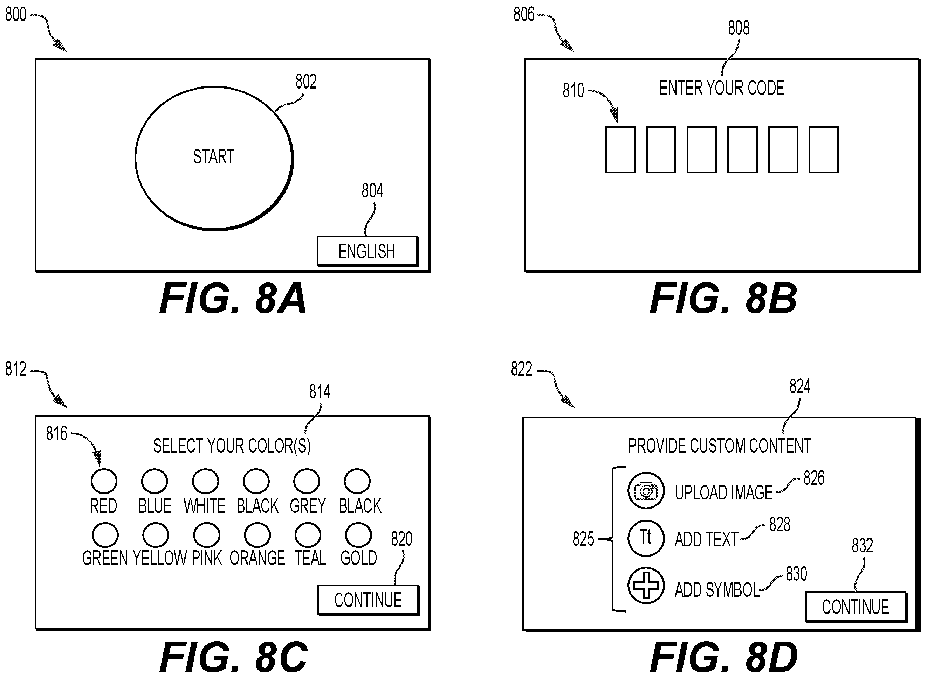

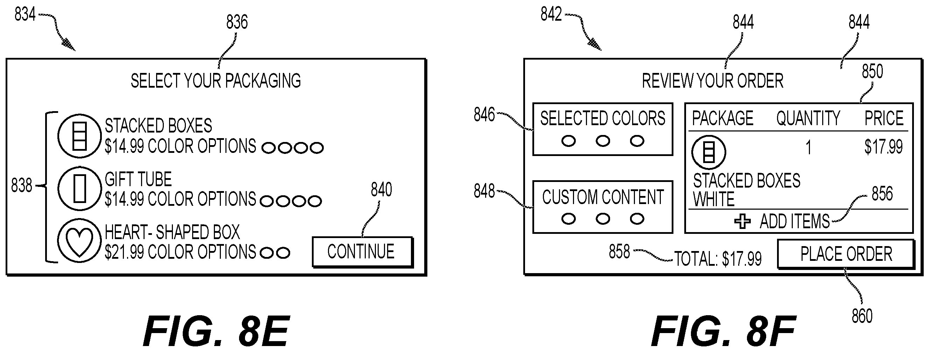

The kiosk application may then display an order review page to prompt the user to review the customization selections, and complete the order (e.g., to end the customization session) by selecting a control element. In response to receiving a selection of the control element to complete the order, the kiosk application may display a payment option page. In some examples, the payment option page may simply instruct the user to proceed to a checkout location. In other examples, and as described in detail with reference to FIG. 5, the payment option page may provide alternative payment options using the kiosk device 104 and/or the user device 102. In some examples, the kiosk application may also prompt the user to sign up for and/or provide additional information for marketing or other similar services of the entity following completion of the order. Example user interfaces of the customization session pages displayed by the kiosk application are shown in FIGs. 8A-8F.

In some examples, upon the kiosk application starting the customization session, the kiosk application may send a request including the order identifier to the in-store custom order platform 112 to generate a cart via the commerce platform 122 for the session. The commerce platform 122 may generate the cart for the customization session, where the cart may be associated with the order identifier, as well as an identifier for the first store. The cart may include custom data fields for storing session-related data, such as the assigned code 210, the device information of the user device 102, the registration identifier from the virtual queue system 118, an identifier from the content moderation and/or image transformation services, if applicable, and an indicator (e.g., a flag) that the order has been approved by an in-store associate through the FOH application executing on the administrative device 106. At the end of the customization session, cart data 246, including the customization selections and order information, may be transmitted from the kiosk application to the in-store custom order platform 112 (e.g., to be added to or associated with the cart).

The in-store custom order platform 112 may persist at least a portion of the cart data 246 (e.g., at least a first portion 248 of the cart data 246) to the commerce platform 122. The in-store custom order platform 112 may also provide at least a second portion 250 of the cart data 246 to the administrative system 114. In some examples, the second portion 250 may be a subset of the first portion 248 of the cart data 246 that is relevant for the fulfillment of the order. For example, upon receiving the second portion 250 of the cart data 246, the administrative system 114 may be configured to update a list of orders ready to be packaged that is provided for display via the BOH application executing on the administrative device 106. The second portion 250 of the cart data 246 may be stored in association with the order in the list. Inclusion in the list may trigger a BOH associate to package the customized food items associated with the order once the food items have been printed with the custom content by the printing device 110. Additionally, the in-store custom order platform 112 may provide an end of session notification and/or provide subsets of the cart data 246 to one or more of the other microservices 128, including payment processing services to indicate a transaction is pending and/or marketing services if the user selects to sign up at the end of the session.

Further, the in-store custom order platform 112 may publish a "send third message" event 252 to the event broker system 124. The "send third message" event 252 may include at least the device information of the user device 102, the order identifier, among other order-related information, and a third template identifier. The event broker system 124 may transmit the "send third message" event 252 to one or more subscribing systems, including at least the user messaging system 126. In response, the user messaging system 126 may generate and send an order confirmation message 254 to the user device 102 based on information included in the "send third message" event 252. For example, the order confirmation message 254 may be an SMS message generated using a third template associated with the third template identifier that includes the order identifier, a description of the order, and instructs the user to proceed to a checkout location in the store to pay for the order.

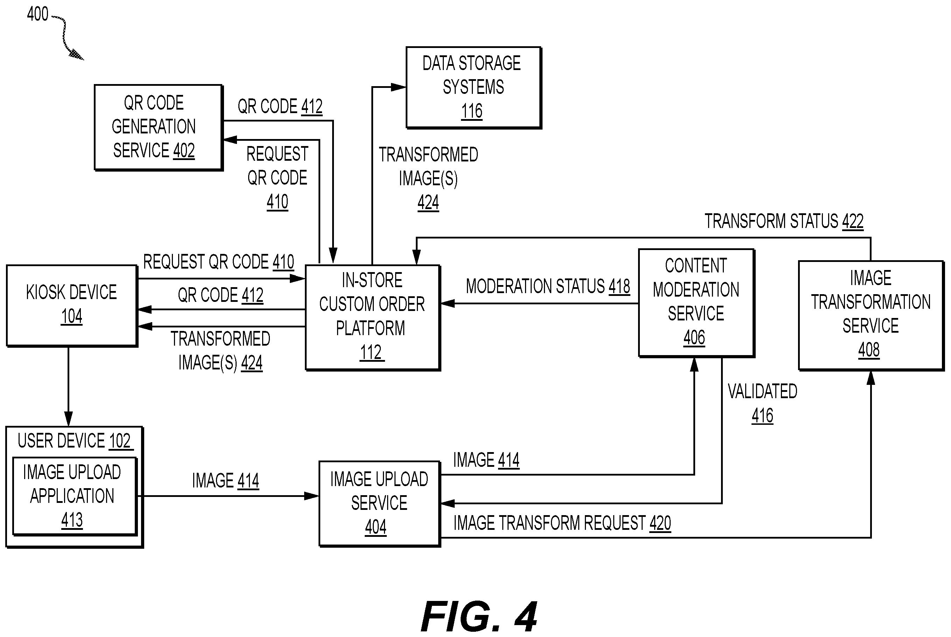

**When** the user proceeds to the checkout location, an in-store associate may request the order identifier provided to the user in the order confirmation message 254. The order identifier may be received as input to the FOH application executing on the administrative device 106. The FOH application may enable the associate to review and edit the customization selections and/or other aspects of the order. As described in more detail with reference to FIG. 4, when the customization selections include an upload of an image, the review and editing process may include reviewing a plurality of image versions generated with different shading or coloring (e.g., dark, medium, and light) to ensure selection of a most optimal version for printing onto the customized food items. In examples where the color selection is performed after the customization session at the kiosk device 104 is completed, the review and editing process may include updating the order to indicate the one or more colors selected.

Upon review and approval through the FOH application, the in-store custom order platform 112 may update one or more fields in the cart, such as the indicator (e.g., a flag) that the order has been approved through the FOH application. In one example, a transaction for the order may then be completed via the POS device 108 which may be separate from or integrated with the administrative device 106. In other examples, the user may have an option to pay for the order using a terminal device connected to the kiosk device 104 or via a virtual terminal executed on the user device 102. In such examples, the associate may be called over to the kiosk device 104 prior to allowing payment to proceed, such that the FOH application can be used to perform the review and approval process as described above.

**The** in-store custom order platform 112 may receive an approval of the transaction from one or more of the other microservices 128 configured to provide payment processing services. The in-store custom order platform 112 may provide the approval to the commerce platform 122, and the commerce platform 122 may convert the cart into an order with the approval attached. In other examples, described in detail with reference to FIG. 5, the payment processing services may publish a "transaction success" event, to which the commerce platform 122 subscribes, and receipt of the event causes the commerce platform 122 to convert the cart into the order. The conversion of the cart to the order may trigger the commerce platform 122 to publish an "order creation" event 255 to the event broker system 124. The event broker system 124 may transmit the "order creation" event 255 to one or more subscribing systems, including at least the user messaging system 126. As one example, the user messaging system 126 may generate and send an email and/or text message including a receipt for the order (not shown) in response to receiving the "transaction success" event and/or "order creation" event 255.

Additionally, upon completion of the transaction, the associate may provide the food items in the selected colors to the printing device 110 to print the custom content on the food items. Once the printing device 110 has completed printing the custom content on the food items, a BOH associate viewing the order through the BOH application executing on one of the administrative device 106 may place the customized food items in the selected packaging. Once packaging is completed, input may be provided to the BOH application indicating the order has been completed. In response to the administrative system 114 receiving the input via the BOH application, the administrative system 114 may be configured to publish an "order completed" event 256 to the event broker system 124. The event broker system 124 may transmit the "order completed" event 256 to one or more subscribing systems, including at least the user messaging system 126. In response, the user messaging system 126 may generate and send an order completed message 258 to the user device 102 based on information included in the "order completed" event 256. For example, the order completed message 258 may be an SMS message with text indicating the order is ready for pick-up, and instructing the user to proceed to a pick-location in the store.

FIGs. 2A-2C describe in-store customization processes when the virtual queue of the first store is active, and the device information for the user device 102 is received as part of the virtual queue registration process to enable the transmission of messages to the user device 102 throughout the in-store customization process. However, in other instances, the user may not have or may not wish to use the user device 102 in this manner and/or the virtual queue of the store may be inactive (e.g., turned off), resulting in variations to the above-described in-store customization processes, each addressed in turn below.

As one example variation, when the virtual queue of the first store is active but the user may not have or may not wish to use the user device 102, the FOH application executing on the administrative device 106 of the in-store associate may be configured to request a reserved code for the first store (e.g., for use in place of the assigned code 210). The administrative system 114 may receive the request via the FOH application, and forward the request to the in-store custom order platform 112. In response to the request, a code added to the list of assigned codes for storage in the data storage systems 116, and provided to the virtual queue system 118 may be a reserved code allotted to the first store. The in-store custom order platform 112 may retrieve the reserved code from the commerce platform 122. In some examples, the estimated wait time obtained from the virtual queue system 118 may be provided from the in-store custom order platform 112 to the administrative system 114 and displayed through the FOH application to enable the associate to communicate the wait time to the user.

When the user's wait time has expired and the user approaches the kiosk device 104 to start the customization session, the FOH application may be configured to retrieve the reserved code from the commerce platform 122, and the in-store associate may input the reserved code displayed by the FOH application into the code requesting page of the kiosk application. Based on the input of reserved code, the kiosk application may enter into a printer mode, which directs the kiosk application to print a document (e.g., a paper ticket or receipt) for the user from the kiosk device 104 at the end of the customization session instead of triggering the sending of the order confirmation message 254. The document may include similar information as the order confirmation message 254, such as the order identifier and a description of the product ordered.

As another example variation, if the virtual queue of the store is inactive, one or more of the virtual queue-related steps of the in-store customization process may be bypassed, and the user may approach the kiosk device 104 to start the customization session. For example, if a volume of users in the store is low, the FOH application executing on the administrative device 106 may be configured to communicate with the administrative system 114 over the network 132 to change a status of the virtual queue from active to inactive. When the status of the virtual queue is changed, the administrative system 114 may notify the in-store custom order platform 112, and the in-store custom order platform 112 may forward the notification to the virtual queue system 118. The in-store custom order platform 112 may also forward the notification to the commerce platform 122, where the commerce platform 122 is configured to monitor the status of the virtual queue.

In some examples, when the virtual queue is inactive and the user device 102 scans the item 202 causing the registration application 204 to be launched in the web browser on the user device 102, the virtual queue system 118 may provide a user interface for display via the registration application 204 that instructs the user to proceed to the kiosk device 104 to start the customization session. In other instances, when the virtual queue for the store is inactive (e.g., turned off), an in-store associate may inform that user that they may proceed to the kiosk device 104 to further bypass scanning the item 202 with the user device 102.

As previously discussed, the kiosk device 104 may be executing the kiosk application, and the kiosk application may initially display the start page via which the user may select a language (e.g., English, Spanish, French, etc.) and select a control element to start a customization session. When the control element is selected, the kiosk application may request a status of the virtual queue (e.g., the status request 242) from the in-store custom order platform 112. The in-store custom order platform 112 may query the commerce platform 122 to obtain the status of the virtual queue for the first store. In this example variation, the virtual queue for the first store is inactive, and thus the in-store custom order platform 112 may return the inactive status to the kiosk application in response to the status request 242. Based on the virtual queue being inactive, the kiosk application may bypass the code request page, and proceed with displaying the customization-related pages. Additionally, the kiosk application may be placed in or default to the printer mode causing the document (e.g., the paper ticket or receipt) to be printed from the kiosk device 104 at the end of the customization session instead of triggering the sending of the order confirmation message 254. As previously discussed, the document may include similar information as the order confirmation message 254, such as the order identifier and a description of the product ordered.

In some examples, based on the virtual queue being inactive, the kiosk application may also display a page that provides an option for the user to opt in to receive text messages rather than receive a printed receipt. If the option is selected, and the device information (e.g., the mobile phone number) of the user device 102 is provided, the printer mode may be deactivated and the user device 102 may then receive messages similar to the order confirmation message 254 and the order completed message 258 described above.

As a further variation, a user may be enabled to perform the in-store customization process using the user device 102 instead of the kiosk device 104 while the user is located within the store and/or a predefined surrounding area. For example, scanning of an item (e.g., the same item 202 or a different item located in the store) by the user device 102 may cause the in-store customization application to be launched in a web browser on the user device 102. In some examples, upon the item being scanned by the user device 102, options of either entering the virtual queue (when active) to perform the in-store customization process using the kiosk device 104 or proceeding with the in-store customization process using the user device 102 may be presented, and the in-store customization application is launched in response to a selection of the latter option. In other examples, the in-store customization application may be automatically launched upon the scanning of the item. The in-store customization application may be a progressive web application that is geo-fenced such that the in-store customization application is only capable of executing within a predefined geographical boundary associated with the store (e.g., the perimeter of the store and/or a predetermined distance extending from and surrounding the store). Similar to the kiosk application, the in-store customization application may provide a plurality of user interfaces, including customization-related and order-related review user interfaces, via which customization selections, order selections, and a confirmation of the order are received as input to and provided as cart data to the in-store custom order platform 112 for association with a cart generated for the customization session. The order for the cart may be generated and completed in a similar manner as described above with reference to FIG. 2C.

As a yet further variation, during the in-store customization process performed using the kiosk device 104 and/or the user device 102, the user may desire to switch to an online customization process. In such examples, the kiosk application or the in-store customization application may provide an option to save and end the customization session. Upon a selection to save and end the customization session, the order identifier associated with the customization session may be provided to the user, and any customization and/or order-related data received may be associated with the cart for the in-store customization. In some examples, the order identifier may be provided via a text message to the user device 102, an email (if the user had provided an email address during queue registration or the customization session), and/or a document with the order number may be printed by the kiosk device 104. The online customization application may be launched on the user device 102 and communicate over the network 132 with the online custom order platform 130 to resume the session online. For example, the online customization application may receive the order identifier as input for provision to the online custom order platform 130. The online custom order platform 130 may use the order identifier to retrieve the cart generated for the in-store customization session from one of the data storage systems 116. In some examples, one or more selections from the in-store customization session may be removed based on a lack of availability of the colors, custom content, and/or packaging types online. An online customization session to complete the order may then be resumed via the online customization application.

Throughout the in-store customization process, various data may be collected and provided to the analytics service (e.g., one of the other microservices 128) for processing. As one example, the analytics service may be configured to measure an interest in product customization based a number of users that registered for the virtual queue, a number of registered users that remained in the virtual queue (e.g. did not cancel or leave the queue), a number of users that initiated a customization session using the kiosk device 104, a number of users that completed the customization session in store, a number of users the completed an online customization session after registering for the virtual queue and/or initiating the customization session using the kiosk device 104. These numbers may be collected from one or a combination of the in-store custom order platform 112, one or more of the microservices 117, and the online custom order platform 130. Additionally, metrics may be collected from the kiosk device 104, such as a sensitivity of a display of the kiosk device 104, a speed of kiosk application page loads, etc.

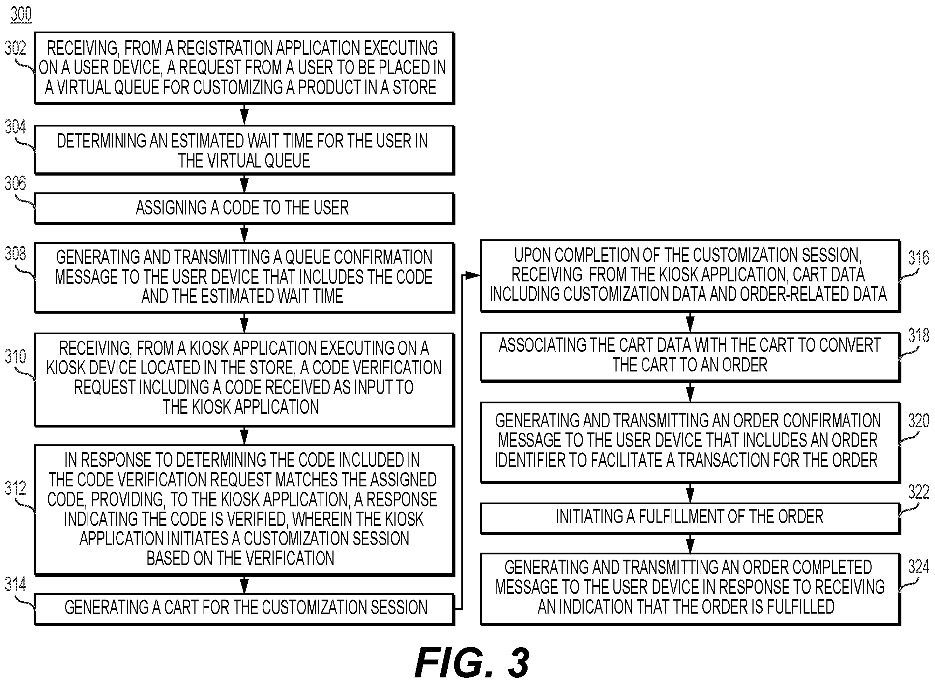

FIG. 3 is a flow chart of an example method 300 for processing custom product orders. In some examples, various steps of the method 300 may be performed by various components of the environment 100.

As shown in FIG. 3, at step 302, the method 300 may include receiving, from the registration application 204 executing on the user device 102, a request from a user to be placed in a virtual queue for customizing a product in a store. The registration application 204 may be associated with the virtual queue system 118 and may be executed on the user device 102 in response to the user device 102 scanning the item 202 displayed in the store. The request may include the user form data 206, where the user form data 206 includes at least device information (e.g., a mobile number) for the user device 102.

**At** step 304, the method 300 may include determining an estimated wait time for the user in the virtual queue. The virtual queue system 118 may determine the estimated wait time based on a number of the kiosk devices 104 located in the store, a number of users in the virtual queue, and an average user experience duration at the kiosk devices 104. The estimated wait times may be updated in real-time based on actual user experience duration at the kiosk devices 104. For example, when a customization session ends at one of the kiosk devices 104 ends, the in-store custom order platform 112 may provide an indication to the virtual queue system 118, and the virtual queue system 118 may update estimated wait times. The virtual queue system 118 may provide the estimated wait time to the in-store custom order platform 112, along with the device information for the user device 102 and any other information from the user form data 206, as part of the first request 208.

At step 306, the method 300 may include assigning the code 210 to the user. In response to receiving the first request 208 from the virtual queue system 118, the in-store custom order platform 112 may select the code 210 to assign to the user, and store the assigned code 210 within the list of assigned codes corresponding to the virtual queue in one of the data storage systems 116 The assigned code 210 may be stored in association with the device information for the user device 102 and an order identifier requested from the commerce platform 122.

At step 308, the method 300 may include generating and transmitting the queue confirmation message 214 to the user device that includes the assigned code 210 and the estimated wait time. For example, the in-store custom order platform 112 may publish the "send first message" event 212 that includes the device information for the user device 102, the assigned code 210, the estimated wait time, and the first template identifier. The event broker system 124 may transmit the "send first message" event 212 to at least the user messaging system 126 to cause the generation and transmission of the queue confirmation message 214 to the user device 102. The queue confirmation message 214 may include the assigned code 210 and the estimated wait time.

At step 310, the method 300 may include receiving, from the kiosk application executing on the kiosk device 104 located in the store, the code verification request 244 including a code received as input to the kiosk application. In some examples, prior to receiving the code verification request 244, the in-store custom order platform 112 may receive a request for a status of the virtual queue (e.g., the status request 242) from the kiosk application. The administrative system 114 may be configured to control an activation or a deactivation of the virtual queue for the store. For example, the FOH application executing on one of the administrative device 106 may be configured to communicate with the administrative system 114 to change the status of the virtual queue between active and inactive. The status of the virtual queue for the store may be monitored by the commerce platform 122. Therefore, when the status request 242 is received, the in-store custom order platform 112 may query the commerce platform 122 to determine a status of the virtual queue for the store, and provide a response to the kiosk application indicating that the virtual queue is active. The kiosk application may display the code request page based on the active status of the virtual queue to prompt provision of the code as input to the kiosk application.

In some examples, between step 308 and step 310, the in-store custom order platform 112 may publish the "send second message" event 218 that includes the device information for the user device 102 and the second template identifier. The event broker system 124 may transmit the "send second message" event 218 to at least the user messaging system 126 to cause generation and transmission of the queue reminder message 220 to the user device 102. The in-store custom order platform 112 may publish the "send second message" event 218 in response to receiving, from the virtual queue system 118, the second request 216 upon a determination by the virtual queue system 118 that a remaining estimated wait time for the user in the virtual queue is below a predefined duration. The queue reminder message 220 may indicate that the wait time is almost over, and provide instructions to proceed to the kiosk device 104 at the first store to begin a customization session. In some examples, the queue reminder message 220 may prompt a reply message to indicate whether the user will proceed to the kiosk device 104 (e.g., by replying "YES") or would rather cancel or leave the virtual queue (e.g., by replying "NO"). In this example, either the reply message 241 indicating the user is proceeding to the kiosk device 104 (e.g., by replying "YES") or no reply message may be received. In other examples, if the reply message 222 indicating the user would rather cancel or leave the virtual queue (e.g., by replying "NO") is received, alternative steps may be taken, as described above with references to FIG. 2A.

Additionally, the in-store custom order platform 112 may monitor a period of time between the publishing of the "send second message" event 218 and the receiving of the code verification request 244 at step 310. In this example, the period of time is less than a predefined timeout period. In other examples, if the period of time surpasses the predefined timeout period, alternative steps may be taken, as described above with reference to FIG. 2B.

At step 312, the method 300 may include providing, to the kiosk application, a response indicating the code is verified in response to determining the code included in the code verification request matches the assigned code 210. For example, the in-store custom order platform 112 may query the one of the data storage system 116 to determine the code included in the code verification request 244 matches the assigned code 210, and the assigned code 210 is next in the virtual queue (e.g., is the first code in the list of assigned codes corresponding to the virtual queue). The response may also include the user form data 206 and/or the order identifier associated with the assigned code 210. The kiosk application may initiate a customization session based on the verification.

**At** step 314, the method 300 may include generating a cart for the customization session. For example, at the stat of the customization session, the kiosk application may send a request to the commerce platform 122 via the in-store custom order platform 112 to generate the cart for the customization session. The order identifier associated with the assigned code 210 may be associated with cart.

At step 316, the method 300 may include receiving, from the kiosk application, cart data, including customization data and order-related data, upon completion of the customization session. Throughout the customization session, the kiosk application may provide a plurality of user interfaces, including customization-related and order-related review user interfaces, via which customization selections, order selections, and a confirmation of the order are received as input to and provided by the kiosk application as the cart data 246.

At step 318, the method 300 may include associating the cart data 246 with the cart to convert the cart to an order. For example, the in-store custom order platform 112 may provide at least the first portion 248 of the cart data 246 to the commerce platform 22. The commerce platform may be configured to update the cart based on the first portion 248 of the cart data 246. Additionally, in some examples, the commerce platform 122 may further update the cart based on an indication received from the administrative system 114 (e.g., via the in-store custom order platform 112) that the customization selections have been reviewed and approved by an in-store associate via the FOH application executing on the administrative device 106. Further, the commerce platform 122 may convert the cart to an order upon detecting an approved transaction for the order. In some examples, the approved transaction may be received as an event published by a payment processing service (e.g., one of the other microservices 128) and transmitted by the event broker system 124 to the commerce platform 122.

In the meanwhile, at step 320, the method 300 may include generating and transmitting the order confirmation message 254 to the user device 102 that includes the order identifier facilitate a transaction for the order. For example, upon the receiving the cart data 246, the in-store custom order platform 112 may publish the "send third message" event 252 that includes the device information for the user device 102, the order identifier, and the third template identifier. The event broker system 124 may transmit the "send third message" event 252 to at least the user messaging system 126 to cause generation and transmission of the order confirmation message 254 to the user device 102. The order confirmation message 254 may include the order identifier to facilitate the transaction for the order, as describe in detail with reference to FIG. 5 below.

At step 322, the method 300 may include initiating a fulfillment of the order. For example, the in-store custom order platform 112 may provide at least the second portion 250 of the cart data 246 to the administrative system 114. The administrative system 114 may be configured to provide the second portion 250 of the cart data 246 to the BOH application executing on the administrative device 106 for display to in-store BOH associates. The second portion 250 of the cart data 246 may include at least information that the in-store BOH associates need to know in order to fulfill the order (e.g., product identifiers for selected packaging, quantities, which customized food items to place in the packaging, etc.).

At step 324, the method 300 may include generating and transmitting the order completed message 258 to the user device 102 in response to receiving an indication that the order is fulfilled. For example, when the in-store BOH associate fulfills the order, a selection indicating the fulfillment may be received as input to the BOH application executing on the administrative device 106, and the indication of the fulfillment may be provided by the BOH application to the administrative system 114. In response to receiving the indication of the fulfillment, the administrative system 114 may publish the "order completed" event 256. The event broker system 124 may transmit the "order completed" event 256 to at least the user messaging system 126 to cause generation and transmission of the order completed message 258 to the user device 102.

Accordingly, certain embodiments may perform processing of custom product orders. The method 300 described above is provided merely as an example, and may include additional, fewer, different, or differently arranged steps than depicted in FIG. 3.

FIG. 4 is a diagram 400 of an example image upload process associated with an in-store customization process. One or more of the other microservices 128, such as a QR code generation service 402, an image upload service 404, a content moderation service 406, and an image transformation service 408, may be configured to perform various operations of the image upload process in conjunction with one or more other components of the environment 100 described with reference to FIG. 1. While QR codes are disclosed in this example, any machine-readable indicia may be generated for use in the image upload process.

For example, during an in-store customization session, one of the customization options provided to the user via the kiosk application executing on the kiosk device 104 is to upload one or more images from the user device 102 for printing onto the product. In response to receiving a selection to upload an image, the kiosk application may transmit a QR code request 410 via the in-store custom order platform 112 to the QR code generation service 402. The QR code request 410 may include an identifier for the session, such as the order identifier. The QR code generation service 402 may generate a QR code 412 that is unique to the session, and may be associated with the order identifier included in the QR code request. The QR code 412 may include a URL to an image upload application 413 associated with the image upload service 404.

**The** QR code generation service 402 may provide the QR code 412 via the in-store custom order platform 112 to the kiosk application. A user interface of the kiosk application may display the QR code 412 on a display of the kiosk device 104, and prompt the scanning of the QR code 412 by the user device 102. When the user device 102 scans the QR code, the image upload application 413 may be launched on a web browser of the user device 102, and the user may select, crop, and upload an image 414 from the user device 102 to the image upload service 404 via the image upload application 413.

The image upload service 404 may provide the image 414 to the content moderation service 406. The content moderation service 406 may validate that the image 414 does not include any prohibited content, and return an indication of the validation 416 to the image upload service 404. The content moderation service 406 may also provide a moderation status 418 of the image 414 to the in-store custom order platform 112. In other examples where the image 414 is determined to include prohibited content, an indication of failure may be returned and the user may be requested via the image upload application 413 to either crop the image 414 to remove the prohibited content and/or select a different image for uploading by the image upload service 404.

Once the content of the image 414 is validated by the content moderation service 406, the image may then be provided to the image transformation service 408 as part of an image transformation request 420. The image transformation service 408 may transform the image 414 by converting the image 414 from color to black and grey, dithering the image, and/or shading the image to generate one or transformed image(s) 424 suitable for printing on the product to be customized. In some examples, the image transformation service 408 may generate multiple versions of the transformed image 424 having different properties or formats. As one example, three sets of the transformed image 424 having different shading (e.g., light, medium, and dark) may be generated and the images may include .tiff and .png files. The image transformation service 408 may then notify the in-store custom order platform 112 that the transformed image(s) 424 are available via provision of a transform status 422. The in-store custom order platform 112 may retrieve the transformed image(s) 424 for storage in one of the data storage systems 116 in association with the cart for the session.

The kiosk application may implement a polling mechanism to retrieve the transformed image(s) 424 via the in-store custom order platform 112, and display one or more of the transformed image(s) 424 for the user to view. For example, the transformed image 424 with the medium shading may be automatically presented to the user. However, during the review and editing processing performed via the FOH application, all three images (e.g., light, medium, and dark) may be presented and one of the other images may be selected for use and the order updated accordingly. In some examples, the transformed image 424 may be overlaid on an image of the food item onto which the transformed image is to be printed.

FIG. 5 is a diagram 500 of an example payment process associated with an in-store customization process. One or more of the other microservices 128, such as a first payment processing service 502, a second payment processing service 504, a third payment processing service 506, and an ERP service 508 may be configured to perform various operations of the payment process in conjunction with one or more other components of the environment 100 described with reference to FIG. 1. In some examples, one or more of the first, second, and/or third payment processing services 502, 504, 506 may be associated with a same provider.

**As** previously discussed with reference to FIG. 2C, after a selection of a control element to complete the order on the order review page of the kiosk application is received, the kiosk application may display a payment option page on the kiosk device 104. In some examples, the payment option page may include at least three payment options. A first payment option may be a "tap to pay" payment option that enables payment via a terminal device attached to or located physically near to the kiosk device 104. A second payment option may be a "scan QR code to pay" payment option that enables payment via the user device 102. A third payment option may be a "continue to in-store checkout" payment option that enables payment via the POS device 108 located in the store.

**When** the first payment option is selected, and the user device 102 or a near-field communication (NFC)-enabled card associated with a payment account is positioned relative to the terminal, the kiosk application executing on the kiosk device 104 may indicate the first payment option as the selected payment method 510 to the in-store custom order platform 112 causing a payment request 512 including a transaction amount to be transmitted from the in-store custom order platform 112 to the first payment processing service 502. The first payment processing service 502 may process the payment request 512 and provide a response 514 to the in-store custom order platform 112 indicating whether the transaction is approved or denied.

When the second payment option is selected, the kiosk application may indicate the second payment option as the selected payment method 510 to the in-store custom order platform 112. Additionally, the kiosk application may transmit a QR code request 516 to the second payment processing service 504. The QR code request 516 may include the order identifier to enable association of the transaction with the cart, as well as a transaction amount. In response, the second payment processing service 504 may generate a QR code 518 that is associated with the order (e.g., includes the order identifier and transaction amount), and includes a URL to a payment application 520 associated with the second payment processing service 504. The second payment processing service 504 may provide the QR code 518 to the kiosk application for display on the kiosk device 104. In addition to displaying the QR code 518, the kiosk application may display instructions to scan the QR code 518 with the user device 102. While QR codes are discussed herein, any other machine-readable indicia may be utilized to facilitate the second payment option.

Upon the user device 102 scanning the QR code 518, the payment application 520 may be launched on a web browser of the user device 102. The payment application 520 may request input of an identifier of a payment account (e.g., a credit card number) and/or provide options for capturing an image of a card associated with the payment account from which the identifier may be optically recognized. The payment application 520 may transmit the payment account identifier, along with the order identifier and the transaction amount, as part of a payment request 522 to the second payment processing service 504 for processing. The second payment processing service 504 may process the payment request 522 and provide a response 524 to the in-store custom order platform 112 indicating whether the transaction is approved or denied. The in-store custom order platform 112 may be listening for the response 524 based on the indication of the second payment option as the selected payment method 510 form the kiosk application.

When either the first payment option or the second payment option is selected, the kiosk application may use a polling mechanism to monitor a payment status 526. If approved, the kiosk application may display a notification indicating the payment method was approved, and providing instructions for next steps of the in-store customization process. If denied, the kiosk application may display a notification indicating the payment method was declined, and prompting provision of another payment method.

When third payment option is selected, the kiosk application may indicate the third payment option as the selected payment method 510 to the in-store custom order platform 112. The kiosk application may also display instructions for the user to proceed to the checkout location. In examples where the user device 102 is registered (e.g., through registering for the virtual queue when the virtual queue is active or opting in at the kiosk device when the virtual queue is inactive), the receiving of the indication of the third payment option as the selected payment method 510 may cause the in-store custom order platform 112 to publish the "send third message" event 252 to trigger the generation and sending of the order confirmation message 254 by the user messaging system 126. In examples where the user does not have or does not wish to register the user device 102 and the kiosk application is in printer mode, the selection of the third payment option may cause the kiosk application to print a document (e.g., paper ticket or receipt) that includes similar information as included within the order confirmation message 254, such as the order identifier.

Upon approaching the check-out location in the store where the POS device 108 is located, the order identifier included in the order confirmation message 254 or the document may be received as input to the POS device 108. The POS device 108 may send an order information request 528 to the in-store custom order platform 112 that includes the order identifier. The in-store custom order platform 112 may retrieve order information 530, including the transaction amount, for the order (e.g., from one the of the data storage systems 116) using the order identifier, and return the order information 530 to the POS device 108. A payment method, such as a credit or debit card, or a digital wallet of the user device 102 may be presented to a reader of the POS device 108 that is configured to obtain an identifier of a payment account associated the payment method, among other information to facilitate payment processing. The POS device 108 may use the order information 530 along with the payment account identifier to generate a payment request 532 for transmission to the third payment processing service 506. The third payment processing service 506 may process the payment request 532 and provide a response 534 to the POS device 108 indicating whether the transaction is approved or denied.

In some examples, when any of the first payment option, the second payment option, or the third payment option are selected, and the transaction is approved by the first, second, or third payment processing services 502, 504, 506, respectively, the first, second, or third payment processing services 502, 504, 506 may publish a "transaction success" event 536 to the event broker system 124. The "transaction success" event 536 may include a payment summary including an indication of the approved transaction. The event broker system 124 may transmit the "transaction success" event 536 to one or more subscribing systems, including at least the commerce platform 122, the user messaging system 126, and the ERP service 508. In response to receiving the "transaction success" event 536, the commerce platform 122 may convert the cart for the session into an order. In response to receiving the "transaction success" event 536, the user messaging system 126 may generate and send a message, such as a text message and/or an email, to the user device 102, including a receipt for the order. In response to receiving the "transaction success" event 536, the ERP service 508 may indicate the order as fulfilled.

In other examples, the in-store custom order platform 112 may directly receive the payment summary from the first, second, or third payment processing services 502, 504, 506, and provide the payment summary to the commerce platform 122 to cause the conversion of the cart to the order. In such examples, the user messaging system 126 may generate and send the message including the receipt for the order in response to receiving, via the event broker system, an "order creation event" published by the commerce platform 122 once the cart is converted, as discussed with reference to FIG. 2C.

FIGS. 6A-6C are example virtual queue user interfaces 600, 610, 618. The virtual queue user interfaces 600, 610, 618 are generated and/or displayed by the registration application 204 executing on the user device 102. For example, in response to the user device 102 scanning the item 202, the registration application 204 may be launched in a web browser on the user device 102, and a first user interface 600 of the landing page of the registration application 204 shown in FIG. 6A may be displayed. The first user interface 600 may include an overview of the in-store customization process 602 that will be performed at the kiosk device 104, an estimated wait time 604 obtained from the virtual queue system 118, a join control element 606 associated with a first option to join the queue, and a link element 608 associated with a second option to continue with an online customization process.

When the join control element 606 is selected, a second user interface 610 of the registration page of the registration application 204 may be displayed, as shown in FIG. 6B. The second user interface 610 may include a form requesting user information (e.g., the user form data 206), such as a mobile phone number, name, and email address. For example, the form may include a prompt 612, a plurality of text boxes 614 into which the user information is entered, and a confirm control element 616 selectable to confirm the entered user information and submit the form.

**When** the confirm control element 616 is selected, a third user interface 618 of the confirmation page of the registration application 204 may be displayed, as shown in FIG. 6C. The third user interface 618 may include an indicator 620 that the user has been placed in the queue and a message (e.g., the queue reminder message 220) will be sent to the user device 102 when the wait time is over. In some examples, the overview of the in-store customization process 602 and/or the estimated wait time 604 displayed in the first user interface 600 may be re-displayed in the third user interface 618. The estimated wait time 604 may be updated by the virtual queue system 118 to account for a time passed in completing the registration process, sessions ended at the kiosk device 104 during that time, and/or other users that had registered ahead of the user during that time.

**The** virtual queue user interfaces 600, 610, 618 described above are provided merely as an example, and can include additional, fewer, different, or differently arranged information and/or interactive control elements than depicted in FIGs. 6A-6C

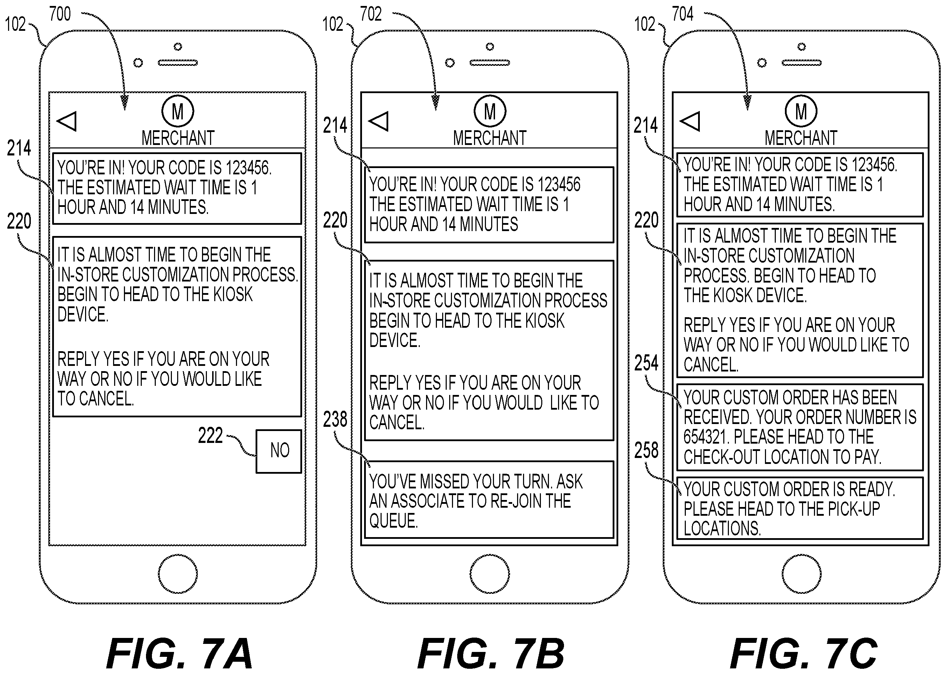

**FIGs.** 7A-7C are example message threads 700, 702, 704 associated with the example in-store customization processes described above with reference to FIGs. 2A-2C respectively. Each of the message threads 700, 702, 704 may include one or messages generated and transmitted by the user messaging system 126 to the user device 102 in response to one or more events received via the event broker system 124.

A first message thread 700 shown in FIG. 7A may be associated with the example in-store customization process described with respect to FIG. 2A. For example, the first message thread 700 may include the queue confirmation message 214 and the queue reminder message 220 generated and transmitted by the user messaging system 126 to the user device 102. The queue confirmation message 214 and the queue reminder message 220 may be respectively generated in response to the user messaging system 126 receiving the "send first message" event 212 and the "send second message" event 218 published by the in-store custom order platform 112 via the event broker system 124. The queue confirmation message 214 may include text indicating the user has been placed in the queue, the assigned code 210, and the estimated wait time in the queue. The user device 102 may receive the queue confirmation message 214 in near real-time to the display of the third user interface 618 of the confirmation page of the registration application 204 on the user device 102, shown in FIG. 6C. The queue reminder message 220 may include text indicating that the wait time is almost over, and provide instructions to proceed to the kiosk device 104 to begin a customization session.

In some examples, the queue reminder message 220 may also include a prompt to reply to the queue reminder message 220 with an indication of whether the user will be proceeding to the kiosk device 104 (e.g., by replying "YES") or would rather cancel or leave the virtual queue (e.g., by replying "NO"). As shown in the first message thread 700, the reply message 222 transmitted from the user device 102 to the user messaging system 126 may indicate to cancel or leave the virtual queue (e.g., by replying "NO"). Resultantly, the user messaging system 126 may provide the in-store custom order platform 112 a cancellation notification 224 and the user may be removed from the queue as described in more detail with reference to FIG. 2A above.

A second message thread 702 may be associated with the example in-store customization process described with respect to FIG. 2B. For example, the second message thread 702 may include the queue confirmation message 214 and the queue reminder message 220 generated and transmitted by the user messaging system 126 to the user device 102 similar to the first message thread 700. No reply message may be sent by the user device 102 in response to the prompt to reply included in the queue reminder message 220 as shown. Additionally, no code verification request associated with the assigned code 210 may be received by the in-store custom order platform 112 from the kiosk device 104 within the predefined timeout period monitored by the in-store custom order platform 112. Resultantly, the user messaging system 126 may be trigged to generate and send the timeout message 238 to the user device 102 based on the receiving of the "send timeout message" event 236 published by the in-store custom order platform 112 via the event broker system 124. The timeout message 238 may include text indicating that the user has missed their turn to customize the product and a prompt to speak with an in-store associate if the user would like to re-join the virtual queue.

A third message thread 704 may be associated with the example in-store customization process described with respect to FIG. 2C. For example, the third message thread 704 may include the queue confirmation message 214 and the queue reminder message 220 generated and transmitted by the user messaging system 126 to the user device 102 similar to the first message thread 700 and the second message thread 702. In this example, the user may approach the kiosk device 104 and perform the in-store customization process. Accordingly, the third message thread 704 may also include the order confirmation message 254 and the order completed message 258.

**The** order confirmation message 254 may be generated and transmitted by the user messaging system 126 in response to receiving a "send third message" event 252 published by the in-store custom order platform 112 via the event broker system 124. The order confirmation message 254 may include text indicating the order identifier, a description of the product ordered, and instructing the user to proceed to a checkout location to pay for the order. The order completed message 258 may be generated and transmitted by the user messaging system 126 in response to receiving an "order completed" event 256 published by the administrative system 114 via the event broker system 124. The order completed message 258 may include text indicating the order is ready for pick-up, and instructing the user to proceed to a pick-location in the store.

**The** message threads 700, 702, 704 described above are provided merely as an example, and can include additional, less, different, or differently arranged information than depicted in FIGs. 7A-7C.

**FIGs.** 8A-8F are example customization session user interfaces 800, 806, 812, 822, 834, 842. The customization session user interfaces 800, 806, 812, 822, 834, 842 are generated and/or displayed by the kiosk application executing on the kiosk device 104. For example, a first user interface of the start page of the kiosk application (e.g., start user interface 800) may be displayed when the user initially approaches the kiosk device 104. The start user interface 800 may include a start control element 802 that is selectable to start the customization session. The start user interface 800 may also include a language control element 804 selectable to change a language of the text to be presented throughout the customization session. In some examples, the default language selected may be primary language associated with a region in which the store is located.

When the start control element 802 is selected to start the session and the kiosk application receives an indication that the virtual queue for the store is active (e.g. responsive to the status request 242), a second user interface of a code request page of the kiosk application (e.g., code request user interface 806) may be displayed. The code request user interface 806 may include a prompt 808 requesting input of a code (e.g., the code assigned to the user or a reserved code for the store), and one or more text boxes 810 for receiving the input. In some examples, a virtual keyboard may also be displayed as part of the code request user interface 806 to enable input of the code. The virtual keyboard displayed may be based on the language selected on the start user interface 800. Additionally or alternatively, the kiosk device 104 can include a physical keyboard as one example input system that is wired or wirelessly connected to the kiosk device 104 to enable input of the code.

As discussed in greater detail with reference to FIG. 2C, a code may be received as input and provided to the in-store custom order platform 112 as part of the code verification request 244. Once verified, the kiosk application may proceed with displaying user interfaces of a plurality of customization-related pages. For example, a color selection user interface 812, a custom content user interface 822, and/or packaging selection user interface 834 as shown in FIGs. 8C, 8D, an 8E may be displayed to respectively prompt the user to select one or more colors for the food items, provide custom content to be printed on the food items, and/or select one or more types of packaging to contain or store the food items.

In other examples, when the start control element 802 is selected to start the session and the kiosk application receives an indication that the virtual queue for the store is inactive (e.g. responsive to the status request 242), the code request user interface 806 may be bypassed. In such examples, a customer information user interface (not shown) may be displayed between the start user interface 800 and the color selection user interface 812. The customer information user interface may request user information similar to the types of information requested as part of the virtual queue registration, and may provide the user an option to opt in to receive text messages (e.g., to receive the order confirmation message 254 and the order completed message 258).

As shown in FIG. 8C, the color selection user interface 812 may include a prompt 814 to select the one or more colors, a plurality of icons 816 representing the colors available for selection, and a control element 820 to advance to a next stage of the customization session. In some examples, the icons 816 may be filled in with, shaded with, and/or otherwise visually display the respective color. The icons 816 may also be accompanied by a text indicator of the respective color. One or more of the icons 816 may be selected via touch input received by the color selection user interface 812. Additionally or alternatively, the kiosk device may include a physical mouse or other similar input device that is wired or wirelessly connected to the kiosk device 104 to enable selection of one or more of the icons 816. The icons 816 may visually change once selected to highlight the selection. The control element 820 may then be selected causing the custom content user interface 822 to be displayed. In other examples, the food items in the different available colors may be displayed within the store itself, and thus the user may be enabled to select the colors separate from the customization session running on the kiosk device 104. In such examples, the color selection user interface 812 may be bypassed, and the custom content user interface 822 may be displayed.

As shown in FIG. 8D, the custom content user interface 822 may include a prompt 824 to provide custom content, a plurality of custom content options 825, and a control element 832 to advance to a next stage of the customization session. The custom content options 825 may include a first option 826 to upload an image from the user device 102, a second option 828 to add text, and/or a third option 830 to add a symbol (e.g., from a library of symbols) to be printed on the food items. In some examples, a combination of the custom content options 825 may be selected. Upon selection of one or more of the custom content options 825 and the control element 832, a set of user interfaces (not shown) specific to the selected custom content option(s) 825 may be displayed to allow uploading of an image, addition of text, and/or addition of a symbol, respectively. As part of the custom content option-specific user interfaces, a preview of the custom content overlaid on the food item may be displayed. In some examples where images are uploaded and/or text is added, the upload images and/or text may be provided to one or more of the other microservices 128, such as the content moderation service. In such examples, the set of user interfaces may include indications of whether the images and/or text were validated by the content moderation service or need to be modified.

After the design-related customizations have been completed, the packaging selection user interface 834 may be displayed as shown in FIG. 8E. The packaging selection user interface 834 may include a prompt 836 to select packaging, a plurality of packaging options 838, and a control element 840 to advance to a next stage of the customization session. Each of the packaging options 838 displayed may include an image of the packaging, an associated price, and available colors (and optionally sizes) for packaging if more than one. One of the packaging options 838 may be selected via touch input received by the packaging selection user interface 834. Additionally or alternatively, the kiosk device may include a physical mouse or other similar input device that is wired or wirelessly connected to the kiosk device 104 to enable selection of the packaging options 838. The control element 840 may then be selected.

Once the various customizations associated with the colors, custom content, and/or packaging have been selected, a user interface of the order review page of the kiosk application (e.g., an order review user interface 842) may be displayed. The order review user interface 842 may include a prompt 844 to review the order, along with a display of the selected colors 846, the custom content 848, and the selected packaging 850 (including a quantity and associated price) to facilitate the review. Additionally, the order review user interface 842 may provide an option 856 to add items to the order. Adding items may include adding additional packaging for the same colors and custom content and/or selecting a second set of color, custom content, and packaging options. Further, the order review user interface 842 may include a transaction amount 858 for the order and a place order control element 860. Upon selection of the place order control element 860, the customization session may end and the order may be confirmed. In some examples, and as discussed above in detail, the kiosk application may display a payment option page and/or marketing related pages (not shown).

The customization session user interfaces 800, 806, 812, 822, 834, 842 described above are provided merely as an example, and can include additional, fewer, different, or differently arranged information and/or interactive control elements than depicted in FIGs. 8A-8F.

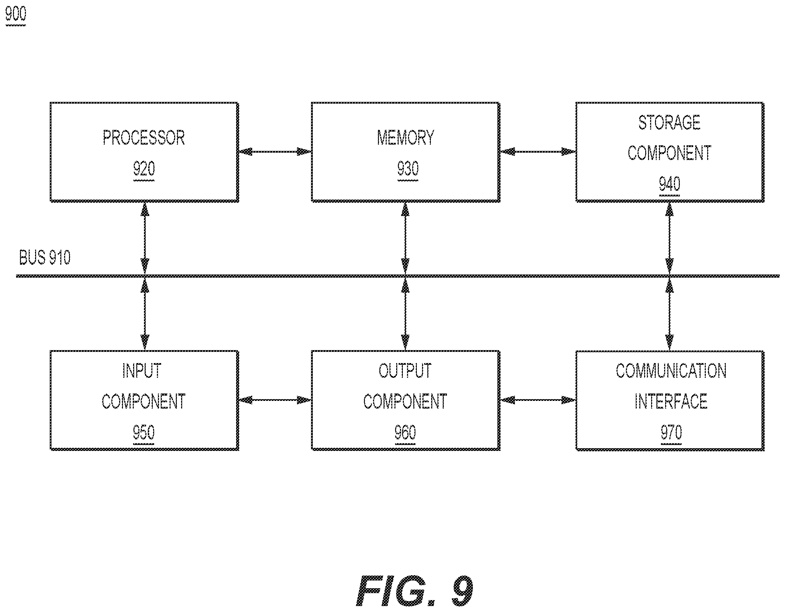

FIG. 9 is a diagram of example components of a device 900. The device 900 may execute the techniques (i.e., methods) described in the current disclosure. The device 900 may correspond to one or more of the user device 102, the kiosk device 104, the administrative device 106, the POS device 108, the printing device 110, the in-store custom order platform 112, the administrative system 114, the data storage systems 116, each of the microservices 117, and the online custom order platform 130. As shown in FIG. 9, the device 900 may include a bus 910, a processor 920, a memory 930, a storage component 940, an input component 950, an output component 960, and a communication interface 970.

**The** bus 910 includes a component that permits communication among the components of the device 900. The processor 920 may be implemented in hardware, firmware, or a combination of hardware and software. The processor 920 may be a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component.

**The** processor 920 may include one or more processors capable of being programmed to perform a function. The memory 930 may include a random access memory (RAM), a read only memory (ROM), and/or another type of dynamic or static storage device (e.g., a flash memory, a magnetic memory, and/or an optical memory) that stores information and/or instructions for use by the processor 920.

**The** storage component 940 may store information and/or software related to the operation and use of the device 900. For example, the storage component 940 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

**The** input component 950 may include a component that permits the device 900 to receive information, such as via user input (e.g., a touch screen display, a keyboard, a keypad, a mouse, a button, a switch, and/or a microphone for receiving the reference sound input). Additionally, or alternatively, the input component 950 may include a sensor for sensing information (e.g., a global positioning system (GPS) component, an accelerometer, a gyroscope, and/or an actuator). The output component 960 may include a component that provides output information from the device 900 (e.g., a display, a speaker for outputting sound at the output sound level, and/or one or more light-emitting diodes (LEDs))

The communication interface 970 may include a transceiver-like component (e.g., a transceiver and/or a separate receiver and transmitter) that enables the device 900 to communicate with other devices, such as via a wired connection, a wireless connection, or a combination of wired and wireless connections. The communication interface 970 may permit the device 900 to receive information from another device and/or provide information to another device. For example, the communication interface 970 may include an Ethernet interface, an optical interface, a coaxial interface, an infrared interface, a radio frequency (RF) interface, a universal serial bus (USB) interface, a Wi-Fi interface, a cellular network interface, or the like.

The device 900 may perform one or more processes described herein. The device 900 may perform these processes based on the processor 920 executing software instructions stored by a non-transitory computer-readable medium, such as the memory 930 and/or the storage component 940. A computer-readable medium may be defined herein as a non-transitory memory device. A memory device may include memory space within a single physical storage device or memory space spread across multiple physical storage devices.

The software instructions may be read into the memory 930 and/or the storage component 940 from another computer-readable medium or from another device via the communication interface 970. When executed, the software instructions stored in the memory 930 and/or the storage component 940 may cause the processor 920 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of the components shown in FIG. 9 are provided as an example. In practice, the device 900 may include additional components, fewer components, different components, or differently arranged components than those shown in FIG. 9. Additionally, or alternatively, a set of components (e.g., one or more components) of the device 900 may perform one or more functions described as being performed by another set of components of the device 900.

## Claims

1. A method performed by a platform configured to integrate functionalities of an administrative system associated with a store providing in-store customization of products and a plurality of microservices, including at least a virtual queue system, a commerce platform, an event broker system, and a user messaging system, to process orders for products that are customized in the store using a kiosk application executing on a kiosk device, the method comprising:
receiving, from the virtual queue system, a first request, wherein the first request includes device information for a user device of a user received by the virtual queue system as part of a registration process to place the user in a virtual queue for customizing a product in the store, and an estimated wait time for the user in the virtual queue determined by the virtual queue system;
assigning a code to the user, wherein the assigned code is stored in a data store in association with the device information;
publishing a send queue confirmation message event that includes the device information, the assigned code, and the estimated wait time, wherein the event broker system transmits the send queue confirmation message event to at least the user messaging system to cause generation and transmission of a queue confirmation message to the user device, the queue confirmation message including the assigned code and the estimated wait time;
receiving, from the kiosk application, a code verification request including a code received as input to the kiosk application;
in response to determining the code included in the code verification request matches the assigned code, providing, to the kiosk application, a response indicating the code is verified, wherein the kiosk application initiates a customization session based on the verification;
providing, to the commerce platform, a request from the kiosk application to generate a cart for the customization session;
upon completion of the customization session, receiving, from the kiosk application, cart data including customization data and order-related data;
providing, to the commerce platform, at least a first portion of the cart data, wherein the commerce platform is configured to update the cart based on the first portion of the cart data and convert the cart to an order upon detecting a transaction for the order is approved;
publishing a send order confirmation message event that includes the device information and an order identifier associated with the order, wherein the event broker system transmits the send order confirmation message event to at least the user messaging system to cause generation and transmission of an order confirmation message to the user device, the order confirmation message including the order identifier; and
providing, to the administrative system, at least a second portion of the cart data, wherein the administrative system is configured to provide the second portion of the cart data for display via an application executing on an administrative device to initiate a fulfillment of the order, and in response to receiving an indication via the application that the order is fulfilled, publish an order completion event that is transmitted by the event broker system to at least the user messaging system to cause generation and transmission of an order completed message to the user device.

2. The method of claim 1, further comprising:
receiving, from the virtual queue system, a second request in response to the virtual queue system determining a remaining estimated wait time for the user in the virtual queue is below a predefined duration;
publishing a send queue reminder message event that includes the device information, wherein the event broker system transmits the send queue reminder message event to at least the user messaging system to cause generation and transmission of a queue reminder message to the user device; and optionally
monitoring a period of time between the publishing of the send queue reminder message event and the receiving of the code verification request, wherein the period of time is less than a predefined timeout period.

3. The method of claim 1 or 2, wherein the administrative system is configured to control an activation or a deactivation of the virtual queue for the store, and a status of the virtual queue for the store is monitored by the commerce platform.

4. The method of claim 3, further comprising:
prior to receiving the code verification request, receiving, from the kiosk application, a request for a status of the virtual queue;
querying the commerce platform to determine a status of the virtual queue for the store; and
providing, to the kiosk application, a response indicating that the virtual queue is active, wherein the kiosk application displays a code request page based on the active status of the virtual queue to prompt provision of the code as input to the kiosk application.

5. The method of any of claims 1-4, wherein the administrative system is configured receive an approval of the customization data from a front of house application executing on an administrative device located in the store, and the method further comprises:
providing, to the commerce platform, an indication of the approval received from the administrative system, wherein the commerce platform is configured to update the cart to include the indication.

6. The method of any of claims 1-5, wherein the plurality of microservices further include a QR generation service and an image upload service, and the method further comprises:
providing, to the QR generation service, a QR code request received from the kiosk application in response to the kiosk application receiving a selection to upload an image from the user device to customize the product during the customization session; and
providing, to the kiosk application, a QR code generated by the QR generation service for display on a user interface of the kiosk application, wherein the displayed QR code is scanned by the user device causing an image upload application associated with the image upload service to be executed on the user device.

7. The method of claim 6, wherein the plurality of microservices further include a content moderation service and an image transformation service, and the method further comprises:
providing an image uploaded from the user device via the image upload application to the kiosk application for display, wherein the image is provided by the image upload application to the content moderation service for validation and to the image transformation service for generation of one or more transformed images suitable for printing on the product, and wherein at least one of the one or more transformed images is the image provided to the kiosk application for display.

8. The method of any of claims 1-7, wherein:
the plurality of microservices further include a payment processing service, and the method further comprises:
receiving, from the kiosk application, an indication of a payment option selected by the user to complete the transaction for the order using a point of sale device located in the store;
receiving, from the point of sale device, the order identifier as part of an order information request; and
using the order identifier, receiving stored information associated with the order, including an amount of the transaction, to provide to the point of sale device responsive to the request, wherein the point of sale device generates and transmits a payment request to the payment processing service for the amount of the transaction; or
the plurality of microservices further include a payment processing service, and the method further comprises:
receiving, from the kiosk application, an indication of a payment option selected by the user to complete the transaction for the order using a terminal device connected to the kiosk device, wherein an identifier of a payment account of the user is provided from the terminal device to the payment processing service for processing;
based on the payment option selected, providing a request including an amount of the transaction to the payment processing service;
receiving, from the payment processing service, a response indicating an approval of the transaction; and
providing, to the kiosk application, the indication of approval for display; or
the plurality of microservices further include a payment processing service, and the method further comprises:
receiving, from the kiosk application, an indication of a payment option selected by the user to complete the transaction for the order using the user device, wherein the kiosk application displays a code requested from the payment processing service, a payment application associated with the payment processing service is executed on the user device in response to the user device scanning the code, and an identifier of a payment account of the user is provided from the payment application to the payment processing service as a payment request for processing;
based on the payment option selected, listening for a response to the payment request from the payment processing service indicating an approval of the transaction; and
providing, to the kiosk application, the indication of approval for display.

9. A system to process orders for products customized in a store, the system comprising:
an administrative system associated with a store providing in-store customization of products;
a plurality of microservices, including at least a virtual queue system, a commerce platform, an event broker system, and a user messaging system; and
a platform configured to integrate functionalities of the administrative system and the plurality of microservices to process orders for products that are customized in the store using a kiosk application executing on a kiosk device, the platform comprising:
at least one memory configured to store instructions; and
at least one processor configured to execute the instructions to perform operations comprising:
receiving, from the virtual queue system, a first request, wherein the first request includes device information for a user device of a user received by the virtual queue system as part of a registration process to place the user in a virtual queue for customizing a product in the store, and an estimated wait time for the user in the virtual queue determined by the virtual queue system;
assigning a code to the user, wherein the assigned code is stored in a data store in association with the device information;
publishing a send queue confirmation message event that includes the device information, the assigned code, and the estimated wait time, wherein the event broker system transmits the send queue confirmation message event to at least the user messaging system to cause generation and transmission of a queue confirmation message to the user device, the queue confirmation message including the assigned code and the estimated wait time;
receiving, from the kiosk application, a code verification request including a code received as input to the kiosk application;
in response to determining the code included in the code verification request matches the assigned code, providing, to the kiosk application, a response indicating the code is verified, wherein the kiosk application initiates a customization session based on the verification;
providing, to the commerce platform, a request from the kiosk application to generate a cart for the customization session;
upon completion of the customization session, receiving, from the kiosk application, cart data including customization data and order-related data;
providing, to the commerce platform, at least a first portion of the cart data, wherein the commerce platform is configured to update the cart based on the first portion of the cart data and convert the cart to an order upon detecting a transaction for the order is approved;
publishing a send order confirmation message event that includes the device information and an order identifier associated with the order, wherein the event broker system transmits the send order confirmation message event to at least the user messaging system to cause generation and transmission of an order confirmation message to the user device, the order confirmation message including the order identifier; and
providing, to the administrative system, at least a second portion of the cart data, wherein the administrative system is configured to provide the second portion of the cart data for display via an application executing on an administrative device to initiate a fulfillment of the order, and in response to receiving an indication via the application that the order is fulfilled, publish an order completion event that is transmitted by the event broker system to at least the user messaging system to cause generation and transmission of an order completed message to the user device.

10. The system of claim 9, wherein the system is a cloud computing system, and the plurality of microservices are hosted as individual nodes of the cloud computing system; and
optionally wherein the system is extensible such that one or more of the plurality of microservices are removable from or replaceable within the system, and one or more additional microservices are integratable with the system.

11. The system of claim 9 or 10, the operations further comprising:
receiving, from the virtual queue system, a second request in response to the virtual queue system determining a remaining estimated wait time for the user in the virtual queue is below a predefined duration;
publishing a send queue reminder message event that includes the device information, wherein the event broker system transmits the send queue reminder message event to at least the user messaging system to cause generation and transmission of a queue reminder message to the user device; and optionally
monitoring a period of time between the publishing of the send queue reminder message event and the receiving of the code verification request, wherein the period of time is less than a predefined timeout period.

12. The system of any of claims 9-11, wherein the administrative system is configured to control an activation or a deactivation of the virtual queue for the store, and a status of the virtual queue for the store is monitored by the commerce platform.

13. The system of claim 12, the operations further comprising:
prior to receiving the code verification request, receiving, from the kiosk application, a request for a status of the virtual queue;
querying the commerce platform to determine a status of the virtual queue for the store; and
providing, to the kiosk application, a response indicating that the virtual queue is active, wherein the kiosk application displays a code request page based on the active status of the virtual queue to prompt provision of the code as input to the kiosk application.

14. The system of any of claims 9-13, wherein the administrative system is configured receive an approval of the customization data from a front of house application executing on an administrative device located in the store, and the operations further comprising:
providing, to the commerce platform, an indication of the approval received from the administrative system, wherein the commerce platform is configured to update the cart to include the indication.

15. A non-transitory computer-readable medium configured to store instructions that, when executed by one or more processors of a platform configured to integrate functionalities of an administrative system associated with a store providing in-store customization of products and a plurality of microservices, including at least a virtual queue system, a commerce platform, an event broker system, and a user messaging system, cause the one or more processors to perform operations to process orders for products that are customized in the store using a kiosk application executing on a kiosk device, the operations comprising:
receiving, from the virtual queue system, a first request, wherein the first request includes device information for a user device of a user received by the virtual queue system as part of a registration process to place the user in a virtual queue for customizing a product in the store, and an estimated wait time for the user in the virtual queue determined by the virtual queue system;
assigning a code to the user, wherein the assigned code is stored in a data store in association with the device information;
publishing a send queue confirmation message event that includes the device information, the assigned code, and the estimated wait time, wherein the event broker system transmits the send queue confirmation message event to at least the user messaging system to cause generation and transmission of a queue confirmation message to the user device, the queue confirmation message including the assigned code and the estimated wait time;
receiving, from the kiosk application, a code verification request including a code received as input to the kiosk application;
in response to determining the code included in the code verification request matches the assigned code, providing, to the kiosk application, a response indicating the code is verified, wherein the kiosk application initiates a customization session based on the verification;
providing, to the commerce platform, a request from the kiosk application to generate a cart for the customization session;
upon completion of the customization session, receiving, from the kiosk application, cart data including customization data and order-related data;
providing, to the commerce platform, at least a first portion of the cart data, wherein the commerce platform is configured to update the cart based on the first portion of the cart data and convert the cart to an order upon detecting a transaction for the order is approved;
publishing a send order confirmation message event that includes the device information and an order identifier associated with the order, wherein the event broker system transmits the send order confirmation message event to at least the user messaging system to cause generation and transmission of an order confirmation message to the user device, the order confirmation message including the order identifier; and
providing, to the administrative system, at least a second portion of the cart data, wherein the administrative system is configured to provide the second portion of the cart data for display via an application executing on an administrative device to initiate a fulfillment of the order, and in response to receiving an indication via the application that the order is fulfilled, publish an order completion event that is transmitted by the event broker system to at least the user messaging system to cause generation and transmission of an order completed message to the user device.

## Patentansprüche

1. Verfahren, das von einer Plattform durchgeführt wird, die so eingerichtet ist, dass sie Funktionalitäten eines Verwaltungssystems, das einem Geschäft zugeordnet ist, das eine Anpassung von Produkten in dem Geschäft bereitstellt, und mehrere Mikrodienste integriert, einschließlich mindestens eines virtuellen Warteschlangensystems, einer Handelsplattform, eines Ereignismaklersystems und eines Benutzernachrichtensystems, um Aufträge für Produkte zu verarbeiten, die in dem Geschäft unter Verwendung einer Kioskanwendung, die auf einer Kioskvorrichtung ausgeführt wird, angepasst werden, wobei das Verfahren umfasst:
Empfangen, von dem virtuellen Warteschlangensystem, einer ersten Anforderung, wobei die erste Anforderung Vorrichtungsinformationen für eine Benutzervorrichtung eines Benutzers, die von dem virtuellen Warteschlangensystem als Teil eines Registrierungsprozesses empfangen werden, um den Benutzer in eine virtuelle Warteschlange zum Anpassen eines Produkts in dem Geschäft einzureihen, und eine geschätzte Wartezeit für den Benutzer in der virtuellen Warteschlange, die durch das virtuelle Warteschlangensystem bestimmt wurde, umfasst;
Zuweisen eines Codes für den Benutzer, wobei der zugewiesene Code in einem Datenspeicher in Verbindung mit den Vorrichtungsinformationen gespeichert wird;
Veröffentlichen eines Warteschlangenbestätigungsnachrichten-Sendeereignisses, das die Vorrichtungsinformationen, den zugewiesenen Code und die geschätzte Wartezeit umfasst, wobei das Ereignismaklersystem das Warteschlangenbestätigungsnachrichten-Sendeereignis an mindestens das Benutzernachrichtensystem überträgt, um eine Erzeugung und Übertragung einer Warteschlangenbestätigungsnachricht an die Benutzervorrichtung zu veranlassen, wobei die Warteschlangenbestätigungsnachricht den zugewiesenen Code und die geschätzte Wartezeit umfasst;
Empfangen, von der Kioskanwendung, einer Codeverifizierungsanforderung, die einen Code umfasst, der als Eingabe in die Kioskanwendung empfangen wird;
als Reaktion auf das Bestimmen, dass der in der Codeverifizierungsanforderung umfasste Code mit dem zugewiesenen Code übereinstimmt, Bereitstellen, für die Kioskanwendung, einer Antwort, die angibt, dass der Code verifiziert ist, wobei die Kioskanwendung basierend auf der Verifizierung eine Anpassungssitzung initiiert;
Bereitstellen, für die Handelsplattform, einer Anfrage von der Kioskanwendung, einen Warenkorb für die Anpassungssitzung zu erzeugen;
nach Abschluss der Anpassungssitzung, Empfangen, von der Kioskanwendung, von Warenkorbdaten, die Anpassungsdaten und auftragsbezogenen Daten umfassen;
Bereitstellen, für die Handelsplattform, mindestens eines ersten Abschnitts der Warenkorbdaten, wobei die Handelsplattform so eingerichtet ist, dass sie den Warenkorb basierend auf dem ersten Abschnitt der Warenkorbdaten aktualisiert und den Warenkorb, nachdem sie erkennt, dass eine Transaktion für die Bestellung genehmigt wurde, in eine Bestellung umwandelt;
Veröffentlichen eines Bestellungsbestätigungsnachrichten-Sendeereignisses, das die Vorrichtungsinformationen und eine der Bestellung zugeordnete Bestellungskennung umfasst, wobei das Ereignismaklersystem das Bestellungsbestätigungsnachrichten-Sendeereignis an mindestens das Benutzernachrichtensystem überträgt, um eine Erzeugung und Übertragung einer Bestellungsbestätigungsnachricht an die Benutzervorrichtung zu veranlassen, wobei die Bestellungsbestätigungsnachricht die Bestellungskennung umfasst; und
Bereitstellen, für das Verwaltungssystem, mindestens eines zweiten Abschnitts der Warenkorbdaten, wobei das Verwaltungssystem so eingerichtet ist, dass es den zweiten Abschnitt der Warenkorbdaten zur Anzeige über eine Anwendung bereitstellt, die auf einer Verwaltungsvorrichtung ausgeführt wird, um eine Abwicklung der Bestellung zu initiieren, und als Reaktion auf ein Empfangen einer Angabe über die Anwendung, dass die Bestellung abgewickelt wurde, Veröffentlichen eines Bestellungsfertigstellungsereignisses, das von dem Ereignismaklersystem an mindestens das Benutzernachrichtensystem übertragen wird, um die Erzeugung und Übertragung einer Bestellungsfertigstellungsnachricht an die Benutzervorrichtung zu veranlassen.

2. Verfahren nach Anspruch 1, ferner umfassend:
Empfangen einer zweiten Anforderung von dem virtuellen Warteschlangensystem als Reaktion darauf, dass das virtuelle Warteschlangensystem bestimmt, dass eine verbleibende geschätzte Wartezeit für den Benutzer in der virtuellen Warteschlange unter einer vordefinierten Dauer liegt;
Veröffentlichen eines Warteschlangenerinnerungsnachrichten-Sendeereignisses, das die Vorrichtungsinformationen umfasst, wobei das Ereignismaklersystem das Warteschlangenerinnerungsnachrichten-Sendeereignis an mindestens das Benutzernachrichtensystem überträgt, um die Erzeugung und Übertragung einer Warteschlangenerinnerungsnachricht an das Benutzergerät zu veranlassen; und optional
Überwachen einer Zeitspanne zwischen dem Veröffentlichen des Warteschlangenerinnerungsnachrichten-Sendeereignisses und dem Empfangen der Codeverifizierungsanforderung, wobei die Zeitspanne kleiner als eine vordefinierte Timeout-Zeitspanne ist.

3. Verfahren nach Anspruch 1 oder 2, wobei das Verwaltungssystem so eingerichtet ist, dass es eine Aktivierung oder eine Deaktivierung der virtuellen Warteschlange für das Geschäft steuert, und ein Status der virtuellen Warteschlange für das Geschäft durch die Handelsplattform überwacht wird.

4. Verfahren nach Anspruch 3, ferner umfassend:
vor dem Empfangen der Codeverifizierungsanforderung, Empfangen, von der Kioskanwendung, einer Anforderung für einen Status der virtuellen Warteschlange;
Abfragen der Handelsplattform, um einen Status der virtuellen Warteschlange für das Geschäft zu bestimmen; und
Bereitstellen einer Antwort an die Kioskanwendung, die angibt, dass die virtuelle Warteschlange aktiv ist, wobei die Kioskanwendung basierend auf dem aktiven Status der virtuellen Warteschlange eine Codeanforderungsseite anzeigt, um eine Bereitstellung des Codes als Eingabe an die Kioskanwendung anzufordern.

5. Verfahren nach einem der Ansprüche 1 bis 4, wobei das Verwaltungssystem so eingerichtet ist, dass es eine Genehmigung der Anpassungsdaten von einer Front-of-House-Anwendung empfängt, die auf einer Verwaltungsvorrichtung ausgeführt wird, die sich in dem Geschäft befindet, und das Verfahren ferner umfasst:
Bereitstellen einer Angabe, an die Handelsplattform, der von dem Verwaltungssystem erhaltenen Genehmigung, wobei die Handelsplattform so eingerichtet ist, dass sie den Warenkorb so aktualisiert, dass er die Angabe umfasst.

6. Verfahren nach einem der Ansprüche 1 bis 5, wobei die mehreren Mikrodienste ferner einen QR-Erzeugungsdienst und einen Bild-Upload-Dienst umfassen und das Verfahren ferner umfasst:
Bereitstellen, an den QR-Erzeugungsdienst, einer QR-Code-Anfrage, die von der Kioskanwendung empfangen wird, als Reaktion darauf, dass die Kioskanwendung eine Auswahl empfängt, ein Bild von der Benutzervorrichtung hochzuladen, um das Produkt während der Anpassungssitzung anzupassen; und
Bereitstellen, an die Kioskanwendung, eines QR-Codes, der durch den QR-Erzeugungsdienst erzeugt wird, zur Anzeige auf einer Benutzeroberfläche der Kioskanwendung, wobei der angezeigte QR-Code durch die Benutzervorrichtung gescannt wird, was veranlasst, dass eine mit dem Bild-Upload-Dienst verknüpfte Bild-Upload-Anwendung auf der Benutzervorrichtung ausgeführt wird.

7. Verfahren nach Anspruch 6, wobei die mehreren Mikrodienste ferner einen Inhaltsmoderationsdienst und einen Bildtransformationsdienst umfassen, und das Verfahren ferner umfasst:
Bereitstellen eines von der Benutzervorrichtung über die Bild-Upload-Anwendung hochgeladenen Bildes an die Kioskanwendung zur Anzeige, wobei das Bild von der Bild-Upload-Anwendung an den Inhaltsmoderationsdienst zur Validierung und an den Bildtransformationsdienst zur Erzeugung eines oder mehrerer transformierter Bilder bereitgestellt wird, die zum Drucken auf das Produkt geeignet sind, und wobei mindestens eines des einen oder der mehreren transformierten Bilder das Bild ist, das der Kioskanwendung zur Anzeige bereitgestellt wurde.

8. Verfahren nach einem der Ansprüche 1 bis 7, wobei:
die mehreren Mikrodienste ferner einen Zahlungsverarbeitungsdienst umfassen, und das Verfahren ferner umfasst:
Empfangen, von der Kioskanwendung, einer Angabe einer Zahlungsoption, die von dem Benutzer unter Verwendung einer POS-Vorrichtung, die sich im Geschäft befindet, ausgewählt wurde, um die Transaktion für die Bestellung abzuschließen;
Empfangen, von der POS-Vorrichtung, der Bestellungskennung als Teil einer Bestellungsinformationsanforderung; und
unter Verwendung der Bestellungskennung, Empfangen gespeicherter Informationen, die der Bestellung zugeordnet sind, einschließlich eines Transaktionsbetrags, um diese der POS-Vorrichtung als Reaktion auf die Anforderung bereitzustellen, wobei die POS-Vorrichtung eine Zahlungsanforderung für den Betrag der Transaktion erzeugt und an den Zahlungsverarbeitungsdienst überträgt; oder
die mehreren Mikrodienste ferner einen Zahlungsverarbeitungsdienst umfassen, und das Verfahren ferner umfasst:
Empfangen, von der Kioskanwendung, einer Angabe einer Zahlungsoption, die von dem Benutzer unter Verwendung einer mit der Kioskvorrichtung verbundenen Endgerätvorrichtung ausgewählt wurde, um die Transaktion für die Bestellung abzuschließen, wobei eine Kennung eines Zahlungskontos des Benutzers von der Endgerätvorrichtung für den Zahlungsverarbeitungsdienst zur Verarbeitung bereitgestellt wird;
basierend auf der ausgewählten Zahlungsoption, Bereitstellen einer Anforderung, die einen Betrag der Transaktion umfasst, an den Zahlungsverarbeitungsdienst;
Empfangen einer Antwort von dem Zahlungsverarbeitungsdienst, die eine Genehmigung der Transaktion angibt; und
Bereitstellen, für die Kioskanwendung, der Angabe der Genehmigung zur Anzeige; oder
die mehreren Mikrodienste ferner einen Zahlungsverarbeitungsdienst umfassen, und das Verfahren ferner umfasst:
Empfangen, von der Kioskanwendung, einer Angabe einer Zahlungsoption, die von dem Benutzer unter Verwendung der Benutzervorrichtung ausgewählt wurde, um die Transaktion für die Bestellung abzuschließen, wobei die Kioskanwendung einen von dem Zahlungsverarbeitungsdienst angeforderten Code anzeigt, eine dem Zahlungsverarbeitungsdienst zugeordnete Zahlungsanwendung auf der Benutzervorrichtung ausgeführt wird, als Reaktion darauf, dass die Benutzervorrichtung den Code scannt, und eine Kennung eines Zahlungskontos des Benutzers von der Zahlungsanwendung an den Zahlungsverarbeitungsdienst als Zahlungsanforderung zur Verarbeitung bereitgestellt wird;
basierend auf der ausgewählten Zahlungsoption, Warten auf eine Antwort auf die Zahlungsanforderung von dem Zahlungsverarbeitungsdienst, die eine Genehmigung der Transaktion angibt; und
Bereitstellen, für die Kioskanwendung, der Angabe der Genehmigung zur Anzeige.

9. System zum Verarbeiten von Bestellungen von Produkten, die in einem Geschäft angepasst werden, das System umfassend:
ein Verwaltungssystem, das einem Geschäft zugeordnet ist, das eine Anpassung von Produkten im Geschäft bereitstellt;
mehrere Mikrodienste, die mindestens ein virtuelles Warteschlangensystem, eine Handelsplattform, ein Ereignismaklersystem und ein Benutzernachrichtensystem umfassen; und
eine Plattform, die so eingerichtet ist, dass sie Funktionalitäten des Verwaltungssystems und die mehreren Mikrodienste integriert, um Bestellungen für Produkte zu verarbeiten, die in dem Geschäft unter Verwendung einer Kioskanwendung, die auf einer Kioskvorrichtung ausgeführt wird, angepasst werden, wobei die Plattform Folgendes umfasst:
mindestens einen Speicher, der so eingerichtet ist, dass er Anweisungen speichert; und
mindestens einen Prozessor, der so eingerichtet ist, dass er die Anweisungen ausführt, um Operationen durchzuführen, die Folgendes umfassen:
Empfangen, von dem virtuellen Warteschlangensystem, einer ersten Anforderung, wobei die erste Anforderung Vorrichtungsinformationen für eine Benutzervorrichtung eines Benutzers, die von dem virtuellen Warteschlangensystem als Teil eines Registrierungsprozesses empfangen werden, um den Benutzer in eine virtuelle Warteschlange zum Anpassen eines Produkts in dem Geschäft einzureihen, und eine geschätzte Wartezeit für den Benutzer in der virtuellen Warteschlange, die durch das virtuelle Warteschlangensystem bestimmt wurde, umfasst;
Zuweisen eines Codes für den Benutzer, wobei der zugewiesene Code in einem Datenspeicher in Verbindung mit den Vorrichtungsinformationen gespeichert wird;
Veröffentlichen eines Warteschlangenbestätigungsnachrichten-Sendeereignisses, das die Vorrichtungsinformationen, den zugewiesenen Code und die geschätzte Wartezeit umfasst, wobei das Ereignismaklersystem das Warteschlangenbestätigungsnachrichten-Sendeereignis an mindestens das Benutzernachrichtensystem überträgt, um eine Erzeugung und Übertragung einer Warteschlangenbestätigungsnachricht an die Benutzervorrichtung zu veranlassen, wobei die Warteschlangenbestätigungsnachricht den zugewiesenen Code und die geschätzte Wartezeit umfasst;
Empfangen, von der Kioskanwendung, einer Codeverifizierungsanforderung, die einen Code umfasst, der als Eingabe in die Kioskanwendung empfangen wird;
als Reaktion auf das Bestimmen, dass der in der Codeverifizierungsanforderung umfasste Code mit dem zugewiesenen Code übereinstimmt, Bereitstellen, für die Kioskanwendung, einer Antwort, die angibt, dass der Code verifiziert ist, wobei die Kioskanwendung basierend auf der Verifizierung eine Anpassungssitzung initiiert;
Bereitstellen, für die Handelsplattform, einer Anfrage von der Kioskanwendung, einen Warenkorb für die Anpassungssitzung zu erzeugen;
nach Abschluss der Anpassungssitzung, Empfangen, von der Kioskanwendung, von Warenkorbdaten, die Anpassungsdaten und auftragsbezogenen Daten umfassen;
Bereitstellen, für die Handelsplattform, mindestens eines ersten Abschnitts der Warenkorbdaten, wobei die Handelsplattform so eingerichtet ist, dass sie den Warenkorb basierend auf dem ersten Abschnitt der Warenkorbdaten aktualisiert und den Warenkorb, nachdem sie erkennt, dass eine Transaktion für die Bestellung genehmigt wurde, in eine Bestellung umwandelt;
Veröffentlichen eines Bestellungsbestätigungsnachrichten-Sendeereignisses, das die Vorrichtungsinformationen und eine der Bestellung zugeordnete Bestellungskennung umfasst, wobei das Ereignismaklersystem das Bestellungsbestätigungsnachrichten-Sendeereignis an mindestens das Benutzernachrichtensystem überträgt, um eine Erzeugung und Übertragung einer Bestellungsbestätigungsnachricht an die Benutzervorrichtung zu veranlassen, wobei die Bestellungsbestätigungsnachricht die Bestellungskennung umfasst; und
Bereitstellen, für das Verwaltungssystem, mindestens eines zweiten Abschnitts der Warenkorbdaten, wobei das Verwaltungssystem so eingerichtet ist, dass es den zweiten Abschnitt der Warenkorbdaten zur Anzeige über eine Anwendung bereitstellt, die auf einer Verwaltungsvorrichtung ausgeführt wird, um eine Abwicklung der Bestellung zu initiieren, und als Reaktion auf ein Empfangen einer Angabe über die Anwendung, dass die Bestellung abgewickelt wurde, Veröffentlichen eines Bestellungsfertigstellungsereignisses, das von dem Ereignismaklersystem an mindestens das Benutzernachrichtensystem übertragen wird, um die Erzeugung und Übertragung einer Bestellungsfertigstellungsnachricht an die Benutzervorrichtung zu veranlassen.

10. System nach Anspruch 9, wobei das System ein Cloud-Rechensystem ist und die mehreren Mikrodienste als individuelle Knoten des Cloud-Rechensystems gehostet werden; und
wobei das System optional so erweiterbar ist, dass einer oder mehrere der mehreren Mikrodienste aus dem System entfernbar oder innerhalb des Systems austauschbar sind, und ein oder mehrere zusätzliche Mikrodienste in das System integrierbar sind.

11. System nach Anspruch 9 oder 10, wobei die Operationen ferner Folgendes umfassen:
Empfangen einer zweiten Anforderung von dem virtuellen Warteschlangensystem als Reaktion darauf, dass das virtuelle Warteschlangensystem bestimmt, dass eine verbleibende geschätzte Wartezeit für den Benutzer in der virtuellen Warteschlange unter einer vordefinierten Dauer liegt;
Veröffentlichen eines Warteschlangenerinnerungsnachrichten-Sendeereignisses, das die Vorrichtungsinformationen umfasst, wobei das Ereignismaklersystem das Warteschlangenerinnerungsnachrichten-Sendeereignis an mindestens das Benutzernachrichtensystem überträgt, um die Erzeugung und Übertragung einer Warteschlangenerinnerungsnachricht an das Benutzergerät zu veranlassen; und optional
Überwachen einer Zeitspanne zwischen dem Veröffentlichen des Warteschlangenerinnerungsnachrichten-Sendeereignisses und dem Empfangen der Codeverifizierungsanforderung, wobei die Zeitspanne kleiner als eine vordefinierte Timeout-Zeitspanne ist.

12. System nach einem der Ansprüche 9 bis 11, wobei das Verwaltungssystem so eingerichtet ist, dass es eine Aktivierung oder eine Deaktivierung der virtuellen Warteschlange für das Geschäft steuert, und ein Status der virtuellen Warteschlange für das Geschäft durch die Handelsplattform überwacht wird.

13. System nach Anspruch 12, wobei die Operationen ferner Folgendes umfassen:
vor dem Empfangen der Codeverifizierungsanforderung, Empfangen, von der Kioskanwendung, einer Anforderung für einen Status der virtuellen Warteschlange;
Abfragen der Handelsplattform, um einen Status der virtuellen Warteschlange für das Geschäft zu bestimmen; und
Bereitstellen einer Antwort an die Kioskanwendung, die angibt, dass die virtuelle Warteschlange aktiv ist, wobei die Kioskanwendung basierend auf dem aktiven Status der virtuellen Warteschlange eine Codeanforderungsseite anzeigt, um eine Bereitstellung des Codes als Eingabe an die Kioskanwendung anzufordern.

14. System nach einem der Ansprüche 9 bis 13, wobei das Verwaltungssystem so eingerichtet ist, dass es eine Genehmigung der Anpassungsdaten von einer Front-of-House-Anwendung empfängt, die auf einer Verwaltungsvorrichtung ausgeführt wird, die sich in dem Geschäft befindet, und die Operationen ferner umfassend:
Bereitstellen einer Angabe, an die Handelsplattform, der von dem Verwaltungssystem erhaltenen Genehmigung, wobei die Handelsplattform so eingerichtet ist, dass sie den Warenkorb so aktualisiert, dass er die Angabe umfasst.

15. Nicht-flüchtiges computerlesbares Medium, das so eingerichtet ist, dass es Anweisungen speichert, die bei Ausführung durch einen oder mehrere Prozessoren einer Plattform, die so eingerichtet ist, dass sie Funktionalitäten eines Verwaltungssystems, das einem Geschäft zugeordnet ist, das eine Anpassung von Produkten in dem Geschäft bereitstellt, und mehrere Mikrodienste integriert, einschließlich mindestens eines virtuellen Warteschlangensystems, einer Handelsplattform, eines Ereignismaklersystems und eines Benutzernachrichtensystems, den einen oder die mehreren Prozessoren veranlassen, Operationen zum Verarbeiten von Bestellungen für Produkte durchzuführen, die in dem Geschäft unter Verwendung einer Kioskanwendung, die auf einer Kioskvorrichtung ausgeführt wird, angepasst werden, die Operationen umfassend:
Empfangen, von dem virtuellen Warteschlangensystem, einer ersten Anforderung, wobei die erste Anforderung Vorrichtungsinformationen für eine Benutzervorrichtung eines Benutzers, die von dem virtuellen Warteschlangensystem als Teil eines Registrierungsprozesses empfangen werden, um den Benutzer in eine virtuelle Warteschlange zum Anpassen eines Produkts in dem Geschäft einzureihen, und eine geschätzte Wartezeit für den Benutzer in der virtuellen Warteschlange, die durch das virtuelle Warteschlangensystem bestimmt wurde, umfasst;
Zuweisen eines Codes für den Benutzer, wobei der zugewiesene Code in einem Datenspeicher in Verbindung mit den Vorrichtungsinformationen gespeichert wird;
Veröffentlichen eines Warteschlangenbestätigungsnachrichten-Sendeereignisses, das die Vorrichtungsinformationen, den zugewiesenen Code und die geschätzte Wartezeit umfasst, wobei das Ereignismaklersystem das Warteschlangenbestätigungsnachrichten-Sendeereignis an mindestens das Benutzernachrichtensystem überträgt, um eine Erzeugung und Übertragung einer Warteschlangenbestätigungsnachricht an die Benutzervorrichtung zu veranlassen, wobei die Warteschlangenbestätigungsnachricht den zugewiesenen Code und die geschätzte Wartezeit umfasst;
Empfangen, von der Kioskanwendung, einer Codeverifizierungsanforderung, die einen Code umfasst, der als Eingabe in die Kioskanwendung empfangen wird;
als Reaktion auf das Bestimmen, dass der in der Codeverifizierungsanforderung umfasste Code mit dem zugewiesenen Code übereinstimmt, Bereitstellen, für die Kioskanwendung, einer Antwort, die angibt, dass der Code verifiziert ist, wobei die Kioskanwendung basierend auf der Verifizierung eine Anpassungssitzung initiiert;
Bereitstellen, für die Handelsplattform, einer Anfrage von der Kioskanwendung, einen Warenkorb für die Anpassungssitzung zu erzeugen;
nach Abschluss der Anpassungssitzung, Empfangen, von der Kioskanwendung, von Warenkorbdaten, die Anpassungsdaten und auftragsbezogenen Daten umfassen;
Bereitstellen, für die Handelsplattform, mindestens eines ersten Abschnitts der Warenkorbdaten, wobei die Handelsplattform so eingerichtet ist, dass sie den Warenkorb basierend auf dem ersten Abschnitt der Warenkorbdaten aktualisiert und den Warenkorb, nachdem sie erkennt, dass eine Transaktion für die Bestellung genehmigt wurde, in eine Bestellung umwandelt;
Veröffentlichen eines Bestellungsbestätigungsnachrichten-Sendeereignisses, das die Vorrichtungsinformationen und eine der Bestellung zugeordnete Bestellungskennung umfasst, wobei das Ereignismaklersystem das Bestellungsbestätigungsnachrichten-Sendeereignis an mindestens das Benutzernachrichtensystem überträgt, um eine Erzeugung und Übertragung einer Bestellungsbestätigungsnachricht an die Benutzervorrichtung zu veranlassen, wobei die Bestellungsbestätigungsnachricht die Bestellungskennung umfasst; und
Bereitstellen, für das Verwaltungssystem, mindestens eines zweiten Abschnitts der Warenkorbdaten, wobei das Verwaltungssystem so eingerichtet ist, dass es den zweiten Abschnitt der Warenkorbdaten zur Anzeige über eine Anwendung bereitstellt, die auf einer Verwaltungsvorrichtung ausgeführt wird, um eine Abwicklung der Bestellung zu initiieren, und als Reaktion auf ein Empfangen einer Angabe über die Anwendung, dass die Bestellung abgewickelt wurde, Veröffentlichen eines Bestellungsfertigstellungsereignisses, das von dem Ereignismaklersystem an mindestens das Benutzernachrichtensystem übertragen wird, um die Erzeugung und Übertragung einer Bestellungsfertigstellungsnachricht an die Benutzervorrichtung zu veranlassen.

## Revendications

1. Procédé exécuté par une plateforme configurée pour intégrer des fonctionnalités d'un système administratif associé à un magasin fournissant une personnalisation en magasin de produits et une pluralité de microservices, comprenant au moins un système de file d'attente virtuelle, une plateforme commerciale, un système de courtier d'événements et un système de messagerie utilisateur, pour traiter des commandes pour des produits qui sont personnalisés dans le magasin en utilisant une application de kiosque s'exécutant sur un dispositif de kiosque, le procédé comprenant :
la réception, à partir du système de file d'attente virtuelle, d'une première demande, dans laquelle la première demande comprend des informations de dispositif pour un dispositif utilisateur d'un utilisateur reçues par le système de file d'attente virtuelle dans le cadre d'un processus d'enregistrement pour placer l'utilisateur dans une file d'attente virtuelle pour personnaliser un produit dans le magasin, et un temps d'attente estimé pour l'utilisateur dans la file d'attente virtuelle déterminé par le système de file d'attente virtuelle ;
l'attribution d'un code à l'utilisateur, dans lequel le code attribué est stocké dans une mémoire de données en association avec les informations de dispositif ;
la publication d'un événement d'envoi de message de confirmation de file d'attente qui comprend les informations de dispositif, le code attribué et le temps d'attente estimé, dans lequel le système de courtier d'événements transmet l'événement de message de confirmation de file d'attente d'envoi au moins au système de messagerie utilisateur pour provoquer la génération et la transmission d'un message de confirmation de file d'attente au dispositif utilisateur, le message de confirmation de file d'attente comprenant le code attribué et le temps d'attente estimé ;
la réception, à partir de l'application de kiosque, d'une demande de vérification de code comprenant un code reçu comme entrée dans l'application de kiosque ;
en réponse à la détermination que le code inclus dans la demande de vérification de code correspond au code attribué, la fourniture, à l'application de kiosque, d'une réponse indiquant que le code est vérifié, dans lequel l'application de kiosque lance une session de personnalisation sur la base de la vérification ;
la fourniture, à la plateforme commerciale, d'une demande de l'application de kiosque pour générer un chariot pour la session de personnalisation ;
à l'achèvement de la session de personnalisation, la réception, à partir de l'application de kiosque, de données de chariot comprenant des données de personnalisation et des données liées à la commande ;
la fourniture, à la plateforme commerciale, d'au moins une première partie des données de chariot, dans lequel la plateforme commerciale est configurée pour mettre à jour le chariot sur la base de la première partie des données de chariot et convertir le chariot en une commande lors de la détection d'une transaction pour la commande qui est approuvée ;
la publication d'un événement de message de confirmation de commande qui comprend les informations de dispositif et un identifiant de commande associé à la commande, dans lequel le système de courtier d'événements transmet l'événement de message de confirmation de commande au moins au système de messagerie utilisateur pour provoquer la génération et la transmission d'un message de confirmation de commande au dispositif utilisateur, le message de confirmation de commande comprenant l'identifiant de commande ; et
la fourniture, au système administratif, d'au moins une deuxième partie des données de chariot, dans lequel le système administratif est configuré pour fournir la deuxième partie des données de chariot pour affichage via une application s'exécutant sur un dispositif administratif pour initier une exécution de la commande, et en réponse à la réception d'une indication via l'application que la commande est exécutée, publier un événement d'exécution de commande qui est transmis par le système de courtier d'événements à au moins le système de messagerie utilisateur pour provoquer la génération et la transmission d'un message de commande terminée au dispositif utilisateur.

2. Procédé selon la revendication 1, comprenant en outre :
la réception, à partir du système de file d'attente virtuelle, d'une deuxième demande en réponse au système de file d'attente virtuelle déterminant qu'un temps d'attente estimé restant pour l'utilisateur dans la file d'attente virtuelle est inférieur à une durée prédéfinie ;
la publication d'un événement d'envoi de message de rappel de file d'attente qui comprend les informations de dispositif, dans lequel le système de courtier d'événements transmet l'événement d'envoi de message de rappel de file d'attente au moins au système de messagerie utilisateur pour provoquer la génération et la transmission d'un message de rappel de file d'attente au dispositif d'utilisateur ; et, facultativement,
la surveillance d'une période de temps entre la publication de l'événement d'envoi de message de rappel de file d'attente et la réception de la demande de vérification de code, dans laquelle la période de temps est inférieure à une période de temporisation prédéfinie.

3. Procédé selon la revendication 1 ou 2, dans lequel le système administratif est configuré pour commander une activation ou une désactivation de la file d'attente virtuelle pour le magasin, et un état de la file d'attente virtuelle pour le magasin est surveillé par la plateforme commerciale.

4. Procédé selon la revendication 3, comprenant en outre :
avant la réception de la demande de vérification de code, la réception, à partir de l'application de kiosque, d'une demande pour un état de la file d'attente virtuelle ;
l'interrogation de la plateforme commerciale pour déterminer un état de la file d'attente virtuelle pour le magasin ; et
la fourniture, à l'application de kiosque, d'une réponse indiquant que la file d'attente virtuelle est active, dans lequel l'application de kiosque affiche une page de demande de code basée sur l'état actif de la file d'attente virtuelle pour inviter la fourniture du code en tant qu'entrée à l'application de kiosque.

5. Procédé selon l'une quelconque des revendications 1 à 4, dans lequel le système administratif est configuré pour recevoir une approbation des données de personnalisation provenant d'une application de gestion de la salle s'exécutant sur un dispositif administratif situé dans le magasin, et le procédé comprend en outre :
la fourniture, à la plateforme commerciale, d'une indication de l'approbation reçue du système administratif, dans lequel la plateforme commerciale est configurée pour mettre à jour le chariot pour inclure l'indication.

6. Procédé selon l'une quelconque des revendications 1 à 5, dans lequel la pluralité de microservices comprend en outre un service de génération QR et un service de téléchargement d'image, et le procédé comprend en outre :
la fourniture, au service de génération QR, d'une demande de code QR reçue de l'application de kiosque en réponse à l'application de kiosque recevant une sélection pour télécharger une image depuis le dispositif utilisateur pour personnaliser le produit pendant la session de personnalisation ; et
la fourniture, à l'application de kiosque, d'un code QR généré par le service de génération QR pour affichage sur une interface utilisateur de l'application de kiosque, dans lequel le code QR affiché est balayé par le dispositif utilisateur provoquant l'exécution d'une application de téléchargement d'image associée au service de téléchargement d'image sur le dispositif utilisateur.

7. Procédé selon la revendication 6, dans lequel la pluralité de microservices comprend en outre un service de modération de contenu et un service de transformation d'image, et le procédé comprend en outre :
la fourniture d'une image téléchargée depuis le dispositif utilisateur via l'application de téléchargement d'image à l'application de kiosque pour affichage, dans laquelle l'image est fournie par l'application de téléchargement d'image au service de modération de contenu pour validation et au service de transformation d'image pour génération d'une ou plusieurs images transformées appropriées pour l'impression sur le produit, et dans lequel au moins une de l'une ou plusieurs images transformées est l'image fournie à l'application de kiosque pour affichage.

8. Procédé selon l'une quelconque des revendications 1 à 7, dans lequel :
la pluralité de microservices comprend en outre un service de traitement de paiement, et le procédé comprend en outre :
la réception, à partir de l'application de kiosque, d'une indication d'une option de paiement sélectionnée par l'utilisateur pour réaliser la transaction pour la commande en utilisant un dispositif de point de vente situé dans le magasin ;
la réception, à partir du dispositif de point de vente, de l'identifiant de commande en tant que partie d'une demande d'informations de commande ; et
l'utilisation de l'identifiant de commande, la réception d'informations stockées associées à la commande, comprenant un montant de la transaction, pour fournir au dispositif de point de vente en réponse à la demande, dans lequel le dispositif de point de vente génère et transmet une demande de paiement au service de traitement de paiement pour le montant de la transaction ; ou
la pluralité de microservices comprend en outre un service de traitement de paiement, et le procédé comprend en outre :
la réception, à partir de l'application de kiosque, d'une indication d'une option de paiement sélectionnée par l'utilisateur pour réaliser la transaction pour la commande en utilisant un dispositif terminal connecté au dispositif de kiosque, dans lequel un identifiant d'un compte de paiement de l'utilisateur est fourni du dispositif terminal au service de traitement de paiement pour traitement ;
sur la base de l'option de paiement sélectionnée, la fourniture d'une demande comprenant un montant de la transaction au service de traitement de paiement ;
la réception, à partir du service de traitement de paiement, d'une réponse indiquant une approbation de la transaction ; et
la fourniture, à l'application de kiosque, de l'indication d'approbation pour affichage ; ou
la pluralité de microservices comprend en outre un service de traitement de paiement, et le procédé comprend en outre :
la réception, à partir de l'application de kiosque, d'une indication d'une option de paiement sélectionnée par l'utilisateur pour réaliser la transaction pour la commande en utilisant le dispositif utilisateur, dans lequel l'application de kiosque affiche un code demandé à partir du service de traitement de paiement, une application de paiement associée au service de traitement de paiement est exécutée sur le dispositif utilisateur en réponse au dispositif utilisateur balayant le code, et un identifiant d'un compte de paiement de l'utilisateur est fourni à partir de l'application de paiement au service de traitement de paiement en tant que demande de paiement pour le traitement ;
sur la base de l'option de paiement sélectionnée, l'écoute d'une réponse à la demande de paiement provenant du service de traitement de paiement indiquant une approbation de la transaction ; et
la fourniture, à l'application de kiosque, de l'indication d'approbation pour affichage.

9. Système pour traiter des commandes pour des produits personnalisés dans un magasin, le système comprenant :
un système administratif associé à un magasin fournissant une personnalisation en magasin de produits ;
une pluralité de microservices, comprenant au moins un système de file d'attente virtuelle, une plateforme commerciale, un système de courtier d'événements, et un système de messagerie utilisateur ; et
une plateforme configurée pour intégrer des fonctionnalités du système administratif et de la pluralité de microservices pour traiter des commandes pour des produits qui sont personnalisés dans le magasin en utilisant une application de kiosque s'exécutant sur un dispositif de kiosque, la plateforme comprenant :
au moins une mémoire configurée pour stocker des instructions ; et
au moins un processeur configuré pour exécuter les instructions afin d'effectuer des opérations comprenant :
la réception, à partir du système de file d'attente virtuelle, d'une première demande, dans laquelle la première demande comprend des informations de dispositif pour un dispositif utilisateur d'un utilisateur reçues par le système de file d'attente virtuelle dans le cadre d'un processus d'enregistrement pour placer l'utilisateur dans une file d'attente virtuelle pour personnaliser un produit dans le magasin, et un temps d'attente estimé pour l'utilisateur dans la file d'attente virtuelle déterminé par le système de file d'attente virtuelle ;
l'attribution d'un code à l'utilisateur, dans lequel le code attribué est stocké dans une mémoire de données en association avec les informations de dispositif ;
la publication d'un événement d'envoi de message de confirmation de file d'attente qui comprend les informations de dispositif, le code attribué et le temps d'attente estimé, dans lequel le système de courtier d'événements transmet l'événement de message de confirmation de file d'attente d'envoi au moins au système de messagerie utilisateur pour provoquer la génération et la transmission d'un message de confirmation de file d'attente au dispositif utilisateur, le message de confirmation de file d'attente comprenant le code attribué et le temps d'attente estimé ;
la réception, à partir de l'application de kiosque, d'une demande de vérification de code comprenant un code reçu comme entrée dans l'application de kiosque ;
en réponse à la détermination que le code inclus dans la demande de vérification de code correspond au code attribué, la fourniture, à l'application de kiosque, d'une réponse indiquant que le code est vérifié, dans lequel l'application de kiosque lance une session de personnalisation sur la base de la vérification ;
la fourniture, à la plateforme commerciale, d'une demande de l'application de kiosque pour générer un chariot pour la session de personnalisation ;
à l'achèvement de la session de personnalisation, la réception, à partir de l'application de kiosque, de données de chariot comprenant des données de personnalisation et des données liées à la commande ;
la fourniture, à la plateforme commerciale, d'au moins une première partie des données de chariot, dans lequel la plateforme commerciale est configurée pour mettre à jour le chariot sur la base de la première partie des données de chariot et convertir le chariot en une commande lors de la détection d'une transaction pour la commande qui est approuvée ;
la publication d'un événement de message de confirmation de commande qui comprend les informations de dispositif et un identifiant de commande associé à la commande, dans lequel le système de courtier d'événements transmet l'événement de message de confirmation de commande au moins au système de messagerie utilisateur pour provoquer la génération et la transmission d'un message de confirmation de commande au dispositif utilisateur, le message de confirmation de commande comprenant l'identifiant de commande ; et
la fourniture, au système administratif, d'au moins une deuxième partie des données de chariot, dans lequel le système administratif est configuré pour fournir la deuxième partie des données de chariot pour affichage via une application s'exécutant sur un dispositif administratif pour initier une exécution de la commande, et en réponse à la réception d'une indication via l'application que la commande est exécutée, publier un événement d'exécution de commande qui est transmis par le système de courtier d'événements à au moins le système de messagerie utilisateur pour provoquer la génération et la transmission d'un message de commande terminée au dispositif utilisateur.

10. Système selon la revendication 9, dans lequel le système est un système informatique de nuage, et la pluralité de microservices sont hébergés en tant que nœuds individuels du système informatique de nuage ; et
facultativement dans lequel le système est extensible de sorte qu'un ou plusieurs microservices de la pluralité de microservices peuvent être retirés du système ou remplacés à l'intérieur de celui-ci, et un ou plusieurs microservices supplémentaires peuvent être intégrés au système.

11. Système selon la revendication 9 ou 10, les opérations comprenant en outre :
la réception, à partir du système de file d'attente virtuelle, d'une deuxième demande en réponse au système de file d'attente virtuelle déterminant qu'un temps d'attente estimé restant pour l'utilisateur dans la file d'attente virtuelle est inférieur à une durée prédéfinie ;
la publication d'un événement d'envoi de message de rappel de file d'attente qui comprend les informations de dispositif, dans lequel le système de courtier d'événements transmet l'événement d'envoi de message de rappel de file d'attente au moins au système de messagerie utilisateur pour provoquer la génération et la transmission d'un message de rappel de file d'attente au dispositif d'utilisateur ; et, facultativement,
la surveillance d'une période de temps entre la publication de l'événement d'envoi de message de rappel de file d'attente et la réception de la demande de vérification de code, dans laquelle la période de temps est inférieure à une période de temporisation prédéfinie.

12. Système selon l'une quelconque des revendications 9 à 11, dans lequel le système administratif est configuré pour commander une activation ou une désactivation de la file d'attente virtuelle pour le magasin, et un état de la file d'attente virtuelle pour le magasin est surveillé par la plateforme commerciale.

13. Système selon la revendication 12, les opérations comprenant en outre :
avant la réception de la demande de vérification de code, la réception, à partir de l'application de kiosque, d'une demande pour un état de la file d'attente virtuelle ;
l'interrogation de la plateforme commerciale pour déterminer un état de la file d'attente virtuelle pour le magasin ; et
la fourniture, à l'application de kiosque, d'une réponse indiquant que la file d'attente virtuelle est active, dans lequel l'application de kiosque affiche une page de demande de code basée sur l'état actif de la file d'attente virtuelle pour inviter la fourniture du code en tant qu'entrée à l'application de kiosque.

14. Système selon l'une quelconque des revendications 9 à 13, dans lequel le système administratif est configuré pour recevoir une approbation des données de personnalisation d'une application de gestion de la salle s'exécutant sur un dispositif administratif situé dans le magasin, et les opérations comprenant en outre :
la fourniture, à la plateforme commerciale, d'une indication de l'approbation reçue du système administratif, dans lequel la plateforme commerciale est configurée pour mettre à jour le chariot pour inclure l'indication.

15. Support non transitoire lisible par ordinateur configuré pour stocker des instructions qui, lorsqu'elles sont exécutées par un ou plusieurs processeurs d'une plateforme configurée pour intégrer des fonctionnalités d'un système administratif associé à un magasin fournissant une personnalisation en magasin de produits et d'une pluralité de microservices, comprenant au moins un système de file d'attente virtuelle, une plateforme commerciale, un système de courtier d'événements et un système de messagerie utilisateur, amènent le ou les processeurs à exécuter des opérations pour traiter des commandes de produits qui sont personnalisés dans le magasin à l'aide d'une application de kiosque s'exécutant sur un dispositif de kiosque, les opérations comprenant :
la réception, à partir du système de file d'attente virtuelle, d'une première demande, dans laquelle la première demande comprend des informations de dispositif pour un dispositif utilisateur d'un utilisateur reçues par le système de file d'attente virtuelle dans le cadre d'un processus d'enregistrement pour placer l'utilisateur dans une file d'attente virtuelle pour personnaliser un produit dans le magasin, et un temps d'attente estimé pour l'utilisateur dans la file d'attente virtuelle déterminé par le système de file d'attente virtuelle ;
l'attribution d'un code à l'utilisateur, dans lequel le code attribué est stocké dans une mémoire de données en association avec les informations de dispositif ;
la publication d'un événement d'envoi de message de confirmation de file d'attente qui comprend les informations de dispositif, le code attribué et le temps d'attente estimé, dans lequel le système de courtier d'événements transmet l'événement de message de confirmation de file d'attente d'envoi au moins au système de messagerie utilisateur pour provoquer la génération et la transmission d'un message de confirmation de file d'attente au dispositif utilisateur, le message de confirmation de file d'attente comprenant le code attribué et le temps d'attente estimé ;
la réception, à partir de l'application de kiosque, d'une demande de vérification de code comprenant un code reçu comme entrée dans l'application de kiosque ;
en réponse à la détermination que le code inclus dans la demande de vérification de code correspond au code attribué, la fourniture, à l'application de kiosque, d'une réponse indiquant que le code est vérifié, dans lequel l'application de kiosque lance une session de personnalisation sur la base de la vérification ;
la fourniture, à la plateforme commerciale, d'une demande de l'application de kiosque pour générer un chariot pour la session de personnalisation ;
à l'achèvement de la session de personnalisation, la réception, à partir de l'application de kiosque, de données de chariot comprenant des données de personnalisation et des données liées à la commande ;
la fourniture, à la plateforme commerciale, d'au moins une première partie des données de chariot, dans lequel la plateforme commerciale est configurée pour mettre à jour le chariot sur la base de la première partie des données de chariot et convertir le chariot en une commande lors de la détection d'une transaction pour la commande qui est approuvée ;
la publication d'un événement de message de confirmation de commande qui comprend les informations de dispositif et un identifiant de commande associé à la commande, dans lequel le système de courtier d'événements transmet l'événement de message de confirmation de commande au moins au système de messagerie utilisateur pour provoquer la génération et la transmission d'un message de confirmation de commande au dispositif utilisateur, le message de confirmation de commande comprenant l'identifiant de commande ; et
la fourniture, au système administratif, d'au moins une deuxième partie des données de chariot, dans lequel le système administratif est configuré pour fournir la deuxième partie des données de chariot pour affichage via une application s'exécutant sur un dispositif administratif pour initier une exécution de la commande, et en réponse à la réception d'une indication via l'application que la commande est exécutée, publier un événement d'exécution de commande qui est transmis par le système de courtier d'événements à au moins le système de messagerie utilisateur pour provoquer la génération et la transmission d'un message de commande terminée au dispositif utilisateur.
